# EUROPEAN PATENT APPLICATION

(11) **EP 4 836 087 A1**
(43) Date of publication of application: **04.11.2026**
(21) Application number: 26150341.1
(22) Date of filing: 06.01.2026
(51) Int. Cl.: H01M 10/613, H01M 10/6567, H01M 50/204, H01M 50/251, H01M 50/258, H01M 50/262, H01M 50/244

(54) **ENERGY STORAGE SYSTEM**

(30) Priority: 30.04.2025 KR 20250057550
(71) Applicant: SAMSUNG SDI CO., LTD., Yongin-si, Gyeonggi-do 17084 (KR)
(72) Inventor: PARK, Dae Yeop, 16678 Suwon-si (KR)
(74) Representative: Marks & Clerk LLP

(57) **Abstract**

An energy storage system includes a housing, a battery cell assembly accommodated in the housing and configured to form a battery module together with the housing, and a connecting portion configured to connect a plurality of housings to each other to form a framework supporting a plurality of battery cell assemblies when a plurality of battery modules are connected.

## Description

### BACKGROUND

### 1. Field

Aspects of embodiments of the present disclosure relate to an energy storage system.

### 2. Description of the Related Art

In general, an energy storage system (ESS) refers to a device that can store surplus electricity or store electricity generated using renewable energy. Typically, an energy storage system is constructed with the required capacity by installing a plurality of battery modules in a rack.

As the demand for high-capacity and high-power specifications increases, a greater number and variety of components are assembled into the battery modules and rack of the energy storage system. In addition, cooling devices, fire-extinguishing devices, and the like are being additionally installed to respond to heat generation and fire, making the structure of the energy storage system increasingly complex.

The above-described information disclosed in the technology that forms the background of the present disclosure is provided to facilitate understanding of the background of the present disclosure and may include information that does not constitute the related art.

### SUMMARY

According to an aspect of embodiments of the present disclosure, an energy storage system that can avoid the above-described problems and can reduce a number of components while ensuring safety against fire is provided.

According to an aspect of embodiments of the present disclosure, an energy storage system is capable of reducing a number of components while ensuring safety against fire.

The above and other aspects and features of the present disclosure will be described in or will be apparent from the following description of some embodiments of the present disclosure.

According to one or more embodiments of the present disclosure, an energy storage system includes a housing, a battery cell assembly accommodated in the housing and configured to form a battery module together with the housing, and a connecting portion configured to connect a plurality of housings to each other to form a framework supporting a plurality of battery cell assemblies when a plurality of battery modules are connected.

The housing may include a housing body configured to define (or form) an internal space in which the battery cell assembly is configured to be accommodated (or is accommodatable), an assembly surface on an outer surface of the housing body in contact with another housing, and including the connecting portion protruding (or formed to protrude) therefrom or recessed therein (or thereinto), and a cell receiving surface on an inner surface of the housing body and in contact with the battery cell assembly.

The housing body may include a first body part, a second body part located (or disposed) apart from the first body part in a first direction, and a third body part and a fourth body part located (or disposed) apart from each other in a second direction perpendicular to the first direction and configured to define (or form) the internal space in which the battery cell assembly is configured to be accommodated (or accommodable) together with the first and second body parts, and the energy storage system may further include an injection flow path (formed) in the first body part and configured to define (or form) a flow path through which a fluid is injectable into the housing, and a cooling flow path (formed) in at least one of the second body part, the third body part, and the fourth body part, and configured to define (or form) a flow path through which a fluid is flowable.

The connecting portion may include a first connecting portion including (or having or comprising) a structure configured to couple the housings to each other in a first direction.

The first connecting portion may include a male assembly part on the housing and protruding (or formed on the housing to protrude) from a first surface facing the first direction, and a female assembly part (formed) on the housing at a second surface facing a side opposite to the first surface, and having a shape in which the male assembly part is insertable.

The male assembly part may include a first protrusion protruding (or formed to protrude) from the first surface in the first direction, and a second protrusion (formed) at an end of the first protrusion and having (or formed to have) a width greater than a width of the first protrusion, and the female assembly part may have a shape corresponding to the male assembly part and the male assembly part may be (configured to be) fitted into the female assembly part.

The first connecting portion may include an intermediate connecting part configured to connect the housings to each other at an intermediate portion of each of contact surfaces of the housings, and an end connecting part configured to connect the housings to each other at an edge portion of each of the contact surfaces of the housings.

The connecting portion may further include a second connecting portion having a structure configured to connect the housings to each other in a second direction perpendicular to the first direction.

The second connecting portion may include a first groove (formed) on the housing and (or to be) recessed in a third surface facing the second direction, a second groove (formed) on the housing at a fourth surface facing a side opposite to the third surface, and a wedge (configured to be) inserted into (or in) an insertion space, which is defined (or formed) between the housings by the first groove and the second groove facing each other.

The first groove may include a first step groove (formed) on the third surface and facing the second groove, and a second step groove configured (or formed) as a continuation of an end of the first step groove and having a width greater than a width of the first step groove, and the second groove may have a shape symmetrical to the first groove, and the wedge may have a shape corresponding to the insertion space and may be (configured to be) inserted into (or in) the insertion space.

The energy storage system may further include a reinforcing member extending (or formed to extend) in a first direction and configured to be coupled to a housing assembly formed by interconnecting the plurality of housings.

The connecting portion may include a first groove (formed) on the housing in a second direction perpendicular to the first direction, and a second groove (formed) on the housing at a side opposite to the first groove, and the reinforcing member may include a support extending (or formed to extend) in the first direction and configured to come into contact with (or coming into contact with) the plurality of housings in the second direction, and a plurality of coupling protrusions (disposed) on the support at intervals in the first direction, and (configured to be) fitted into a plurality of first grooves or second grooves (formed) in the housings, each different from the others.

The reinforcing member may include a first reinforcing member configured to come into contact with the housing assembly in the second direction and be coupled to the plurality of first grooves, and a second reinforcing member configured to come into contact with the housing assembly at a side opposite to the first reinforcing member and be coupled to the plurality of second grooves.

The energy storage system may further include an injection flow path defined (or formed) in the housing and configured to form (or define) a flow path through which a fluid is injectable into the housing.

The housing may include a housing body configured to define an internal space in which the battery cell assembly is accommodable (or configured to be accommodated), and a cell receiving surface (formed) on an inner surface of the housing body and facing the internal space, and the injection flow path may include a first transfer flow path (formed) in the housing body and configured to form a flow path through which the fluid is transferable, and an open flow path extending (or formed to extend) from the first transfer flow path to the cell receiving surface to be open toward the internal space.

The injection flow path may further include a plug coupled to close the open flow path and configured to open the open flow path by melting at a certain (e.g., set) temperature or higher.

The energy storage system may further include a fire-extinguishing manifold coupled to the housing and configured to supply the fluid to the injection flow path, wherein the fire-extinguishing manifold may include a manifold body coupled to the housing body, a main flow path (formed) inside the manifold body, an inlet flow path connected to the main flow path and located to be open to an (or the) outside of the housing body, and a second transfer flow path that is connected to the main flow path at a position spaced apart from the inlet flow path and comes into contact with the injection flow path.

The energy storage system may further include a cooling flow path (formed) in the housing and (configured to form or) defining a flow path through which a fluid is flowable.

The energy storage system may further include a cooling manifold coupled to the housing, and configured to supply the fluid to the cooling flow path and discharge the fluid having passed through the cooling flow path.

The cooling flow path may include a forward flow path defining (or configured to form) a flow path through which the fluid is flowable from a first end (of the housing) toward a second end of the housing, and a return flow path located (or disposed) apart from the forward flow path and defining (or forming) a flow path through which the fluid having passed through the forward flow path is flowable toward the first end, and the cooling manifold may include a first cooling manifold coupled to the first end, and configured to supply the fluid to the forward flow path and discharge the fluid having passed through the return flow path, and a second cooling manifold coupled to the second end and configured to transfer the fluid having passed through the forward flow path to the return flow path.

At least some of the above and other features of the invention are set out in the claims.

### BRIEF DESCRIPTION OF THE DRAWINGS

The drawings included with this specification illustrate some embodiments of the present disclosure, and further describe aspects and features of the present disclosure together with the detailed description of the present disclosure. However, the present disclosure is not to be construed as being limited to the drawings.
FIG. 1 is a perspective view schematically illustrating an energy storage system according to an embodiment of the present disclosure;
FIG. 2 is an exploded perspective view of a main portion of FIG. 1;
FIGS. 3 and 4 are schematic exploded perspective views of a main portion of a battery module according to an embodiment of the present disclosure;
FIG. 5 is a perspective view schematically illustrating a housing according to an embodiment of the present disclosure;
FIG. 6 is a front view schematically illustrating the housing of FIG. 5;
FIG. 7 is a perspective view illustrating a state in which the housings shown in FIG. 5 are connected in a first direction and a second direction;
FIG. 8 is an exploded perspective view of a main portion of FIG. 7;
FIG. 9 is a front view of a portion of the state shown in FIG. 7;
FIG. 10 is an enlarged view of a region "A" of FIG. 9;
FIG. 11 is an enlarged view of a region "B" of FIG. 9;
FIG. 12 is an enlarged view of a region "C" of FIG. 9;
FIG. 13 is an enlarged view of a region "D" of FIG. 9;
FIG. 14 is a view illustrating an assembly process of connecting the housings according to an embodiment of the present disclosure in the first direction;
FIG. 15 is a view illustrating an assembly process of connecting the housings according to an embodiment of the present disclosure in the second direction;
FIG. 16 is a view illustrating a process of assembling a reinforcing member to the housings according to an embodiment of the present disclosure;
FIG. 17 is a perspective view schematically illustrating a housing according to another embodiment of the present disclosure;
FIG. 18 is a perspective view schematically illustrating a housing according to another embodiment of the present disclosure;
FIG. 19 is a schematic cross-sectional view of a main portion of the battery module according to an embodiment of the present disclosure;
FIG. 20 is an enlarged view of a region "E" of FIG. 19;
FIG. 21 is a conceptual view illustrating a flow of a fire-extinguishing agent through an injection flow path and a fire-extinguishing manifold according to an embodiment of the present disclosure;
FIG. 22 is a schematic cross-sectional view of a main portion of the battery module according to an embodiment of the present disclosure;
FIG. 23 is a conceptual view for describing the flow of a coolant by a cooling flow path and a cooling manifold according to an embodiment of the present disclosure;
FIG. 24 is a perspective view schematically illustrating a battery cell assembly according to an embodiment of the present disclosure; and
FIG. 25 is an exploded perspective view of a main portion of FIG. 24.

### DETAILED DESCRIPTION

Herein, some embodiments of the present disclosure will be described in further detail with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein are to be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

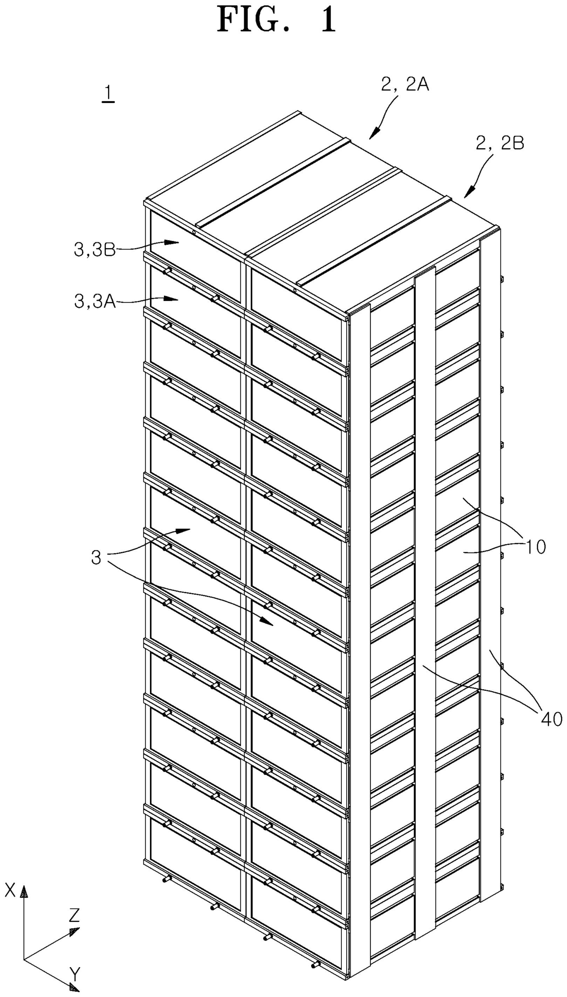

FIG. 1 is a perspective view schematically illustrating an energy storage system according to an embodiment of the present disclosure.

Herein, for convenience of description, X, Y, and Z directions shown in FIG. 1 will be described as vertical, lateral, and front-rear directions, respectively. In the course of describing the present disclosure, when it is necessary to distinguish between a positive (+) direction and a negative (-) direction, the X, Y, and Z directions shown in FIG. 1 may respectively refer to +X, +Y, and +Z directions, and the opposite directions may respectively refer to -X, -Y, and -Z directions. For example, when it is necessary to distinguish between an upward direction and a downward direction, the X direction may refer to the upward direction, and the opposite, or -X, direction may refer to the downward direction.

Referring to FIG. 1, an energy storage system 1 according to an embodiment of the present disclosure may have a structure in which a plurality of battery modules 3 are connected in contact with each other in at least one of the vertical direction (the X direction) and the lateral direction (the Y direction).

The plurality of battery modules 3 may be interconnected in a vertically stacked state to form a module assembly 2. Two or more battery modules 3 may be stacked to form one module assembly 2. A plurality of battery modules 3 each including a first battery module 3A and a second battery module 3B may be provided.

Two or more module assemblies 2 may be disposed in parallel. A plurality of module assemblies 2, including a first module assembly 2A and a second module assembly 2B, may be provided, and the plurality of module assemblies may be interconnected in the lateral direction. When the second module assembly 2B is connected to a left or right side of the first module assembly 2A, a plurality of battery modules 3 constituting the second module assembly 2B may be sequentially stacked adjacent to the first module assembly 2A from a lower side.

The plurality of battery modules 3 may have structures capable of being coupled to each other. The battery modules 3 may respectively include housings 10 (to be described below). In an embodiment, by interconnecting the housings 10, the plurality of battery modules 3 may be integrally interconnected to form a single structure. One module assembly 2 may be configured by connecting the housings 10 in the vertical direction. In addition, the plurality of module assemblies 2 may be interconnected by connecting the housings 10 in the lateral direction.

Although FIG. 1 illustrates a structure in which two module assemblies 2, including the first module assembly 2A and the second module assembly 2B, are interconnected, the energy storage system 1 according to the present disclosure is not limited to such a structure. The energy storage system 1 may be configured with only one module assembly 2 or with three or more module assemblies 2. Further, the number of battery modules 3 constituting each of the first module assembly 2A and the second module assembly 2B may be the same or different.

The number of battery modules 3 constituting one module assembly 2, and the number of module assemblies 2 constituting the energy storage system 1, may be varied and applied in various ways according to an output specifications, size, shape, and installation environment of the energy storage system 1 to be fabricated, for example. Further, some of the plurality of battery modules 3 may be removed or additional battery modules 3 may be added even after the energy storage system 1 according to the present disclosure is installed.

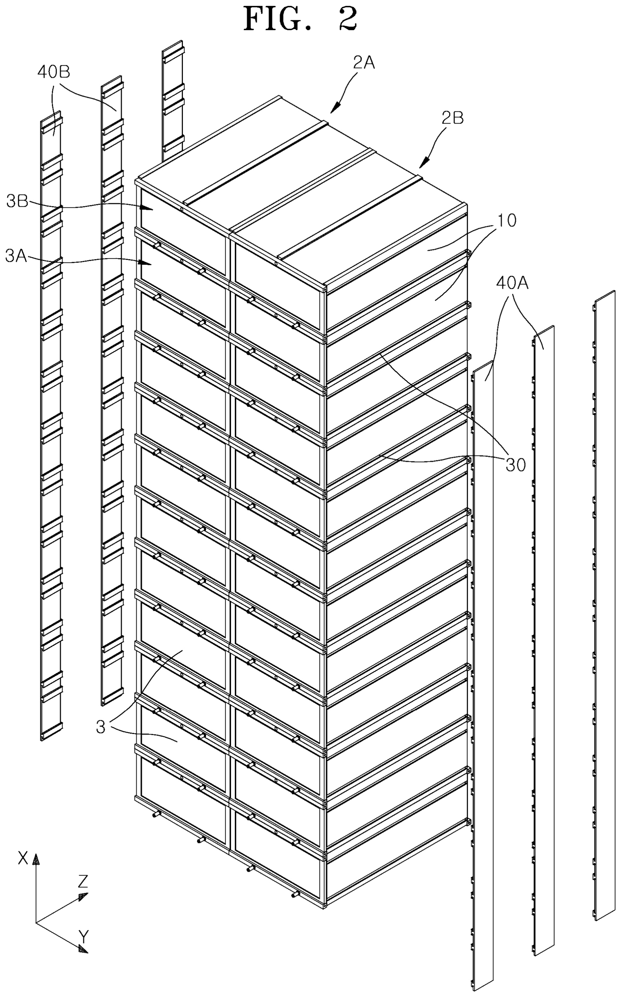

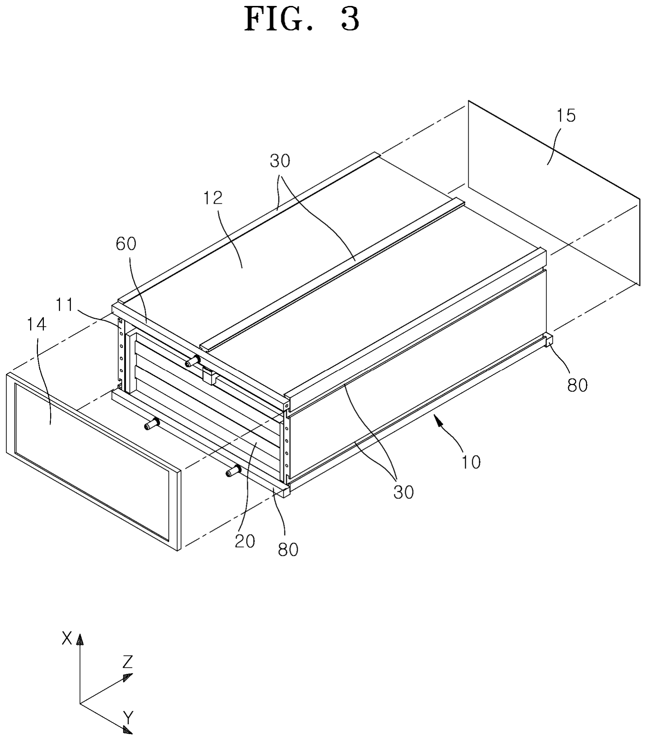

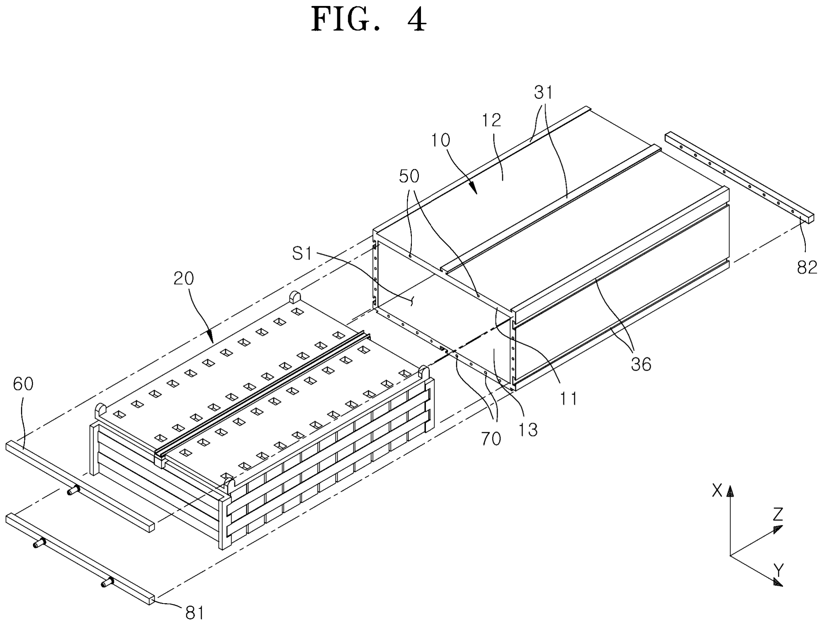

FIG. 2 is an exploded perspective view of a main portion of FIG. 1; and FIGS. 3 and 4 are schematic exploded perspective views of a main portion of the battery module according to an embodiment of the present disclosure.

Referring to FIGS. 2 to 4, the energy storage system 1 according to an embodiment of the present disclosure may include the housings 10, battery cell assemblies 20, connecting portions 30, reinforcing members 40, injection flow paths 50, fire-extinguishing manifolds 60, cooling flow paths 70, and cooling manifolds 80.

Each of the housings 10 may have a shape capable of accommodating the battery cell assembly 20 therein. An internal space S1 that can accommodate and protect the battery cell assembly 20 may be formed inside the housing 10. The housing 10 may have a shape that allows the housings 10 disposed adjacent each other to be in contact with each other in the vertical and lateral directions, and a plurality of housings 10 in an interconnected state may form a framework capable of supporting the plurality of battery modules 3.

In an embodiment, the housings 10 may include a metallic material, such as aluminum, to secure rigidity sufficient to support the plurality of battery modules 3. In an embodiment, to firmly support loads in the vertical and lateral directions, upper, lower, left-side, and right-side portions of the housing 10 may each have the form of a wall or a plate, and the housing 10 may be fabricated in a state in which the upper, lower, left-side, and right-side portions are integrally interconnected. The housing 10 may be manufactured to have any of various cross-sectional shapes, such as through aluminum extrusion or the like.

The housing 10 may have a structure in which at least one of a front side and a rear side is open to accommodate the battery cell assembly 20. A first cover 14 may be coupled to the front side (-Z direction) of the housing 10, and a second cover 15 may be coupled to the rear side (+Z direction) of the housing 10. The first cover 14 may have a structure configured to be detachably assembled to the housing 10 or the battery cell assembly 20 from the front side of the housing 10. The second cover 15 may have a structure fixed to the housing 10 by a fixing member, such as a bolt.

The battery cell assembly 20 may be inserted and accommodated inside the housing 10 through an open front portion of the housing 10. In a state in which the battery cell assembly 20 is accommodated in the housing 10, the first cover 14 may be coupled to the front side of the housing 10 to protect the front portion of the battery cell assembly 20. When inspection or replacement of the battery cell assembly 20 is desired, the first cover 14 may be detached from the housing 10 or the battery cell assembly 20 to open the interior of the housing 10. The second cover 15 may support the battery cell assembly 20 from the rear side of the housing 10 to prevent the battery cell assembly 20 accommodated in the housing 10 from being separated to the outside of the housing 10.

The battery cell assembly 20 may include one or more battery cells 21 and may be accommodated in the housing 10. The battery cell assembly 20 may include other electrical components that are physically and electrically connected to the battery cells 21. The battery cell assembly 20 accommodated in one housing 10 may form one battery module 3 together with the housing 10.

The connecting portions 30 may connect the housings 10 to each other such that, when the plurality of battery modules 3 are connected, the housings 10 form a framework capable of supporting the battery cell assemblies 20. The connecting portions 30 may be formed on outer surfaces of the housings 10 and may connect the plurality of housings 10 so as to be in surface contact with each other.

The connecting portions 30 may be formed on upper and lower surfaces of the housing 10 to connect the plurality of housings 10 to each other in the vertical direction. The plurality of housings 10 may be in surface contact (e.g., tight surface contact) with each other in the vertical direction while being connected to each other by the connecting portions 30. The connecting portions 30 may be formed on left-side and right-side surfaces of the housing 10 to connect the plurality of housings 10 to each other in the lateral direction. The plurality of housings 10 may be in surface contact (e.g., tight surface contact) with each other in the lateral direction while being connected to each other by the connecting portions 30.

The reinforcing member 40 may have a form of a rod or plate extending in the vertical direction (the X direction), and may be coupled to a side surface of the module assembly 2. The reinforcing member 40 may reinforce the rigidity of the module assembly 2 by being coupled to the side surface of the module assembly 2. The reinforcing member 40 may have a length that extends across the plurality of housings 10 constituting the module assembly 2. In an embodiment, the reinforcing member 40 may include a metallic material capable of reinforcing the rigidity of the housings 10.

The injection flow path 50 may form a flow path through which a fluid can be injected into the housing 10. The fluid may be a fire-extinguishing agent. The injection flow path 50 may be formed in the form of a hole or groove in the housing 10 and may be formed to extend in the front-rear direction. The injection flow path 50 may be formed to communicate with the internal space S1 such that the fire-extinguishing agent introduced into the injection flow path 50 can be injected into the interior of the housing 10. The injection flow path 50 may be formed in an upper portion of the housing 10, and the fire-extinguishing agent injected from the injection flow path 50 may be injected downward toward the battery cell assembly 20.

The fire-extinguishing manifold 60 may be coupled to the housing 10 to supply a fire-extinguishing agent to the injection flow path 50. A plurality of injection flow paths 50 may be formed, and the fire-extinguishing manifold 60 may receive a fire-extinguishing agent and branch the fire-extinguishing agent to supply the fire-extinguishing agent to the plurality of injection flow paths 50. The fire-extinguishing manifold 60 may have a form of a block corresponding to a portion of a front or rear surface of the housing 10, may be selectively coupled to the open front and rear sides of the housing 10, and may be in communication with the injection flow paths 50.

The cooling flow path 70 may form a flow path through which a fluid can flow inside the housing 10. The fluid may be a coolant. The cooling flow path 70 may be formed in a form of a hole or groove in the housing 10 and may be formed to extend in the front-rear direction. The cooling flow path 70 may be formed in a lower portion of the housing 10 on which the battery cell assembly 20 is seated. The battery cell assembly 20 may maintain a certain (e.g., set) temperature range through heat exchange with the coolant flowing through the cooling flow path 70, thereby preventing or substantially preventing overheating.

The cooling manifold 80 may be coupled to the housing 10 to supply a coolant to the cooling flow path 70. A plurality of cooling flow paths 70 may be formed, and the cooling manifold 80 may receive a coolant and branch the coolant to supply the coolant to the plurality of cooling flow paths 70. In addition, the cooling manifold 80 may discharge the coolant having passed through the cooling flow path 70. The cooling manifold 80 may have a form of a block corresponding to a portion of the front or rear surface of the housing 10, may be selectively coupled to the open front and rear sides of the housing 10, and may be in communication with the cooling flow path 70.

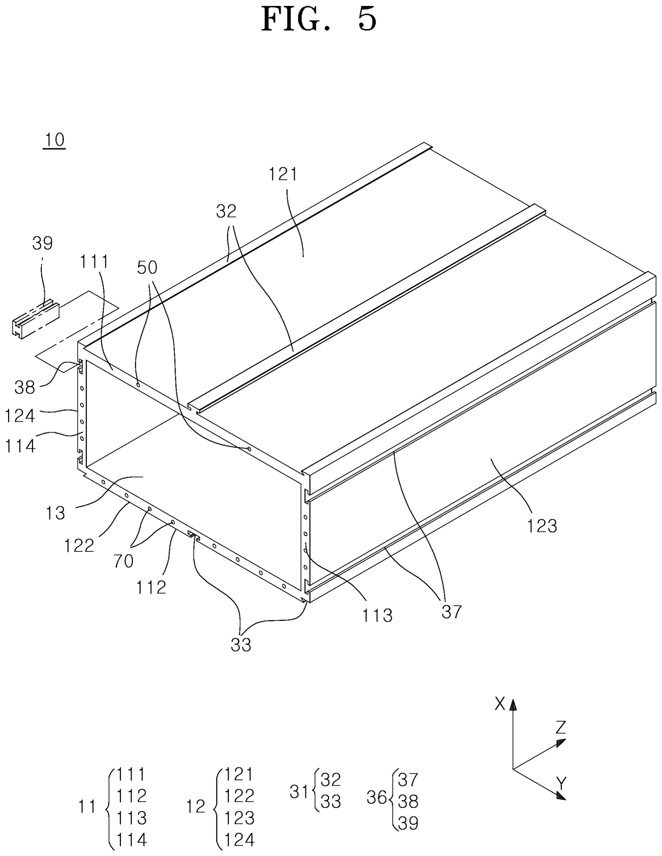

Herein, with reference to FIGS. 5 to 25, the housing 10, the battery cell assembly 20, the connecting portion 30, the reinforcing member 40, the injection flow path 50, the fire-extinguishing manifold 60, the cooling flow path 70, and the cooling manifolds 80 according to the present disclosure will be described in further detail.

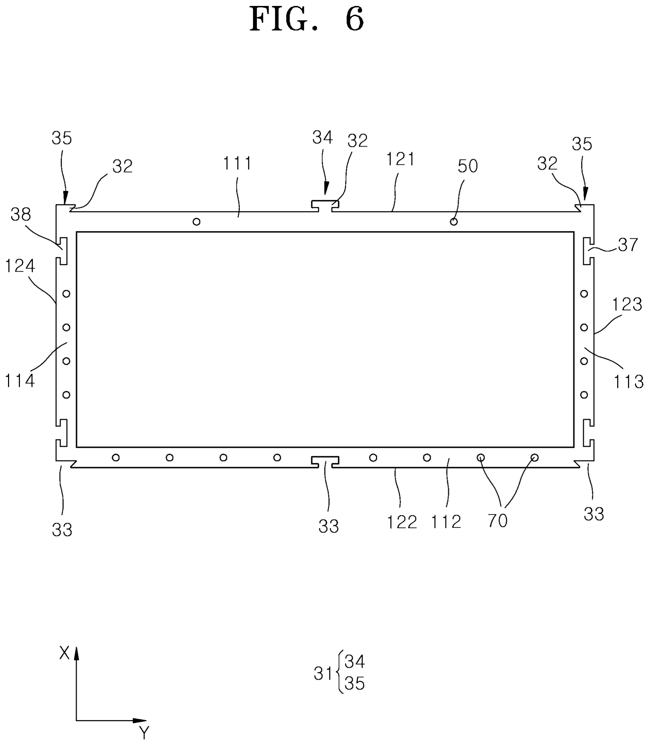

FIG. 5 is a perspective view schematically illustrating the housing according to an embodiment of the present disclosure; and FIG. 6 is a front view schematically illustrating the housing according to an embodiment of the present disclosure.

Referring to FIGS. 5 and 6, the housing 10 according to an embodiment of the present disclosure may include a housing body 11, assembly surfaces 12, and cell receiving surfaces 13.

The housing body 11 is a part that forms a basic framework of the housing 10, and may form the internal space S1 that can accommodate the battery cell assembly 20 therein. The housing body 11 may have a generally rectangular box shape with an internal space S1, and may have a frame shape in which upper, lower, left-side, and right-side portions are closed and front and rear sides are open.

The housing body 11 according to an embodiment of the present disclosure may include a first body part 111, a second body part 112, a third body part 113, and a fourth body part 114.

In an embodiment, the first body part 111, the second body part 112, the third body part 113, and the fourth body part 114 may have structures integrally interconnected to each other. The first body part 111, the second body part 112, the third body part 113, and the fourth body part 114 form the internal space S1 in which the battery cell assembly 20 can be accommodated.

The first body part 111 and the second body part 112 may be disposed apart from each other in a first direction (the vertical direction, or the X direction). The first body part 111 may be formed at an upper portion of the housing body 11 to have the shape of a panel having widths in the lateral direction and the front-rear direction. The second body part 112 may be formed at a lower portion of the housing body 11 to have the shape of a panel, and may have the same widths in the lateral direction and the front-rear direction as the first body part 111.

The third body part 113 and the fourth body part 114 may be disposed apart from each other in a second direction (the lateral direction, or the Y direction) perpendicular to the first direction (the vertical direction or the X direction). The third body part 113 may be formed at the right-side portion of the housing body 11 to have a shape of a panel having widths in the vertical direction and the front-rear direction. The fourth body part 114 may be formed at the left-side portion of the housing body 11 to have a shape of a panel, and may have the same widths in the vertical direction and the front-rear direction as the third body part 113.

The injection flow path 50 that forms a flow path through which a fire-extinguishing agent can be injected into the housing 10 may be formed in the first body part 111. The injection flow path 50 may be formed at an intermediate portion of the first body part 111 in a thickness direction (the X direction) to have a shape of a hole or groove. The first body part 111 may have a certain (e.g., set) thickness that allows the injection flow path 50 to be stably formed while taking into account a reduction in rigidity due to the formation of the injection flow path 50.

The cooling flow path 70 that forms a flow path through which a coolant can flow may be formed in at least one of the second body part 112, the third body part 113, and the fourth body part 114. In an embodiment, a plurality of cooling flow paths 70 may be formed in the second body part 112, the third body part 113, and the fourth body part 114. In an embodiment, the cooling flow path 70 may be formed at an intermediate portion of each of the second body part 112, the third body part 113, and the fourth body part 114 in a thickness direction to have a shape of a hole or groove. The second body part 112, the third body part 113, and the fourth body part 114 may each have a certain (e.g., set) thickness that allows the cooling flow paths 70 to be stably formed while taking into account a reduction in rigidity due to the formation of the cooling flow path 70.

The assembly surfaces 12 may be formed on outer surfaces of the housing body 11, may come into contact with other housings 10, and may have the connecting portion 30 formed to protrude therefrom or recessed therein. When the plurality of battery modules 3 are stacked in the vertical direction or arranged in parallel in the lateral direction, the assembly surfaces 12 of the plurality of battery modules 3 may be brought into face-to-face contact with each other.

The assembly surfaces 12 according to an embodiment of the present disclosure may include a first surface 121, a second surface 122, a third surface 123, and a fourth surface 124.

The first surface 121, the second surface 122, the third surface 123, and the fourth surface 124 may be respectively formed in the first body part 111, the second body part 112, the third body part 113, and the fourth body part 114. An upper surface of the first body part 111 that faces outward may be referred to as the first surface 121. A lower surface of the second body part 112 that faces outward may be referred to as the second surface 122. A right-side surface of the third body part 113 that faces outward may be referred to as the third surface 123. A left-side surface of the fourth body part 114 that faces outward may be referred to as the fourth surface 124.

The cell receiving surfaces 13 may be formed on inner surfaces of the housing body 11 and may face the internal space S1. The cell receiving surfaces 13 may be in contact with the battery cell assembly 20 accommodated in the housing 10. In an embodiment, the cell receiving surfaces 13 may be subjected to insulation treatment by a method such as insulating coating, insulating sheet attachment, or anodizing. The battery cell assembly 20 may be seated on the cell receiving surface 13 corresponding to an upper surface of the second body part 112. Left-side and right-side portions of the battery cell assembly 20 may be respectively in contact with the cell receiving surfaces 13 corresponding to a left-side surface of the third body part 113 and a right-side surface of the fourth body part 114.

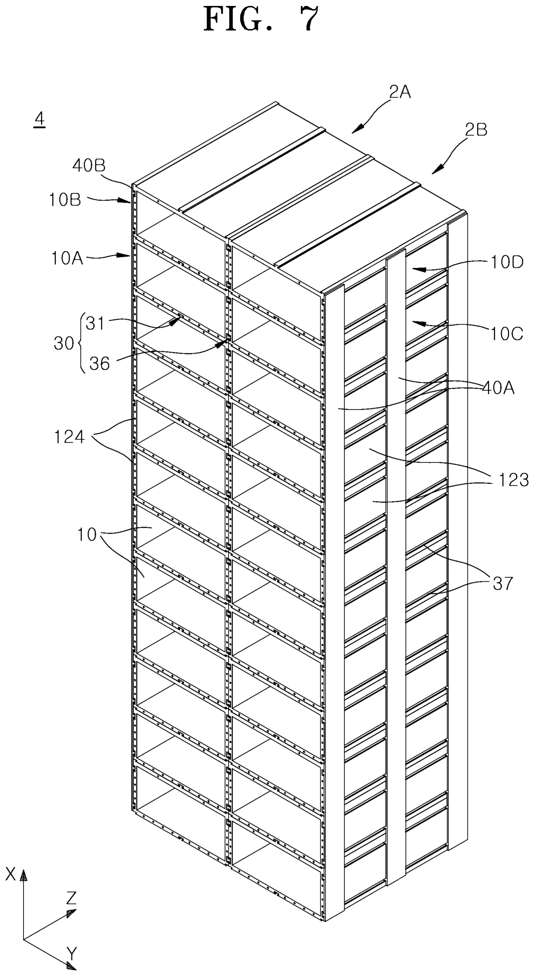

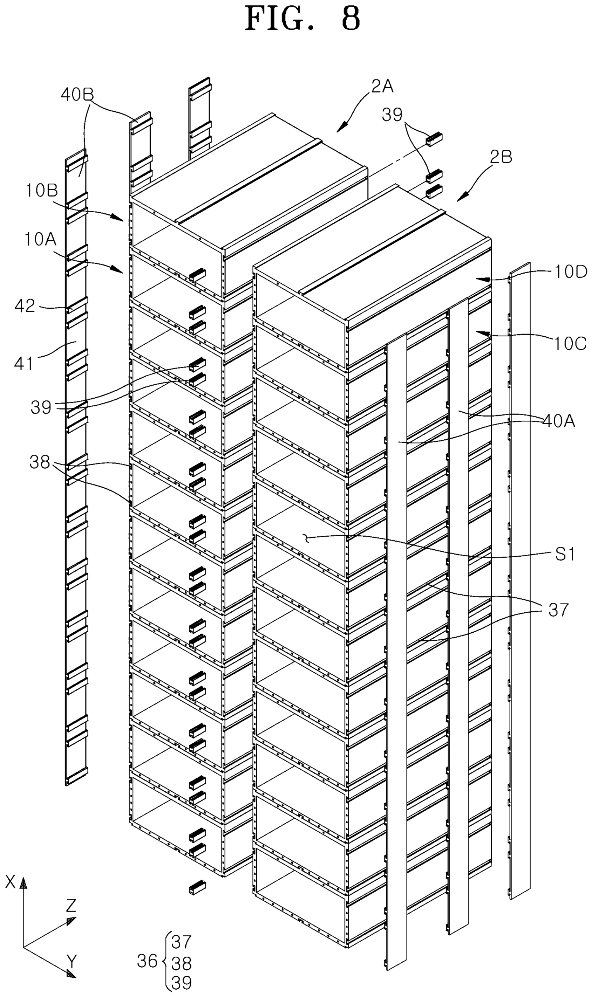

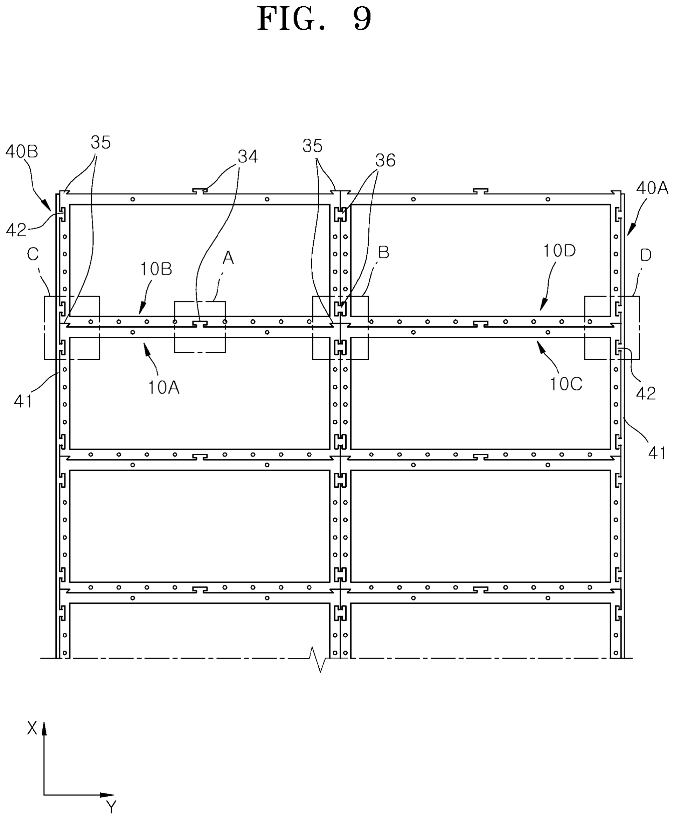

FIG. 7 is a perspective view illustrating a state in which the housings shown in FIG. 5 are connected in the first direction and the second direction; FIG. 8 is an exploded perspective view of a main portion of FIG. 7; and FIG. 9 is a front view of FIG. 7.

Referring to FIGS. 7 to 9, the plurality of housings 10 may form a single structure having a certain (e.g., set) width and rigidity by interconnecting adjacent housings 10 via the connecting portions 30. Such a structure formed by interconnecting the plurality of housings 10 may be referred to as a housing assembly 4.

The housing assembly 4 may form a frame capable of supporting the plurality of battery cell assemblies 20. The housing assembly 4 may form a framework having a frame shape and including a plurality of divided internal spaces S1 to accommodate and support the plurality of battery cell assemblies 20 in a state in which the plurality of housings 10 are stacked, disposed in parallel, and connected. By interconnecting the plurality of housings 10 in this manner, a framework of the energy storage system 1 may be formed.

The housing assembly 4 may have a longitudinal width and a lateral width corresponding to n times those of one housing 10. The energy storage system 1 according to embodiments of the present disclosure may generally have a longitudinal width and a lateral width corresponding to those of the housing assembly 4. The battery module 3 may include the housing 10 and the battery cell assembly 20 accommodated in the housing 10, and the energy storage system 1 according to the present disclosure may generally have a longitudinal width and a lateral width corresponding to n times those of the battery module 3.

A conventional energy storage system includes a separate rack serving as a framework for supporting the battery modules, and has a structure in which the battery modules are mounted on the rack. In contrast, according to embodiments of the present disclosure, the housing assembly 4 can replace the function of the conventional rack, making it possible to omit components corresponding to the rack and configure the energy storage system 1 with a simple structure in which the battery modules 3 are directly interconnected.

The plurality of battery modules 3 may be designated with designations distinguishable from each other, such as the first battery module 3A, the second battery module 3B, and the like. Among the plurality of battery modules 3 forming the first module assembly 2A, one battery module may be referred to as the first battery module 3A, and the battery module 3 disposed above the first battery module 3A may be referred to as the second battery module 3B.

The housing 10 of the first battery module 3A may be referred to as a first housing 10A, and the housing 10 of the second battery module 3B disposed above the first battery module 3A may be referred to as a second housing 10B. The first battery module 3A may include the first housing 10A and the battery cell assembly 20 accommodated in the first housing 10A. The second battery module 3B may include the second housing 10B and the battery cell assembly 20 accommodated in the second housing 10B.

The housing 10 of one of the battery modules 3 constituting the second module assembly 2B, which is connected to the left side or right side of the first module assembly 2A, and the housing 10 disposed thereabove may be distinguished and referred to as a third housing 10C and a fourth housing 10D, respectively. The first housing 10A and the third housing 10C may be adjacent in the lateral direction, and the second housing 10B and the fourth housing 10D may be adjacent in the lateral direction.

The connecting portion 30 according to an embodiment of the present disclosure may include a first connecting portion 31 and a second connecting portion 36.

The first connecting portion 31 may have a structure that allows the housings 10 to be connected to each other in the first direction (the vertical direction, or the X direction). The first connecting portion 31 may have a structure that allows the housings 10 to be directly connected to each other without using a separate intermediate member. When stacking the plurality of battery modules 3 to configure the module assembly 2, the housings 10 adjacent to each other in the vertical direction may be connected to each other by the first connecting portion 31.

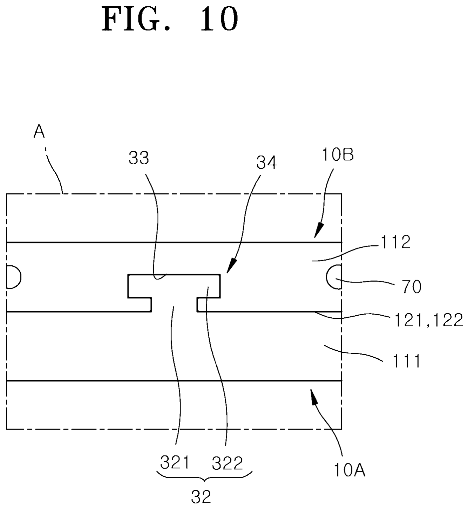

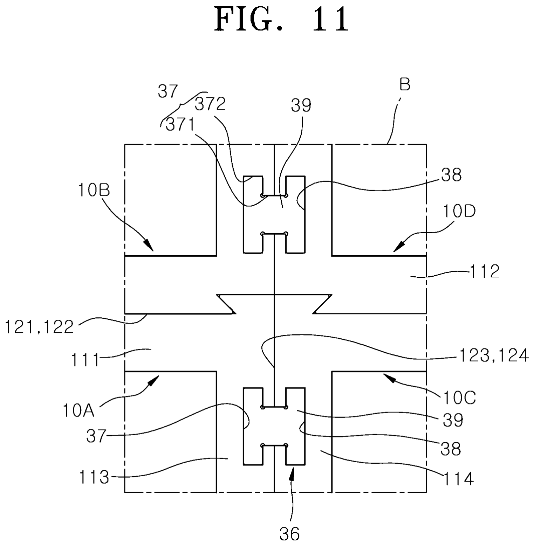

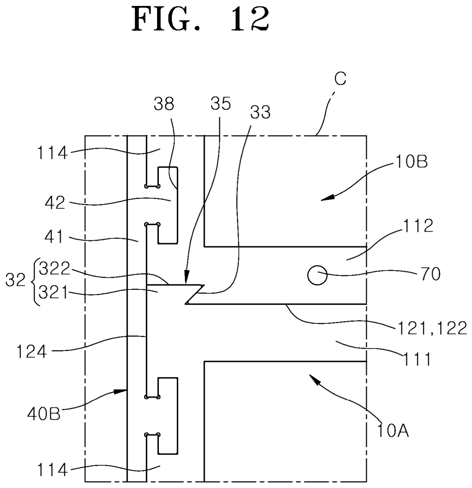

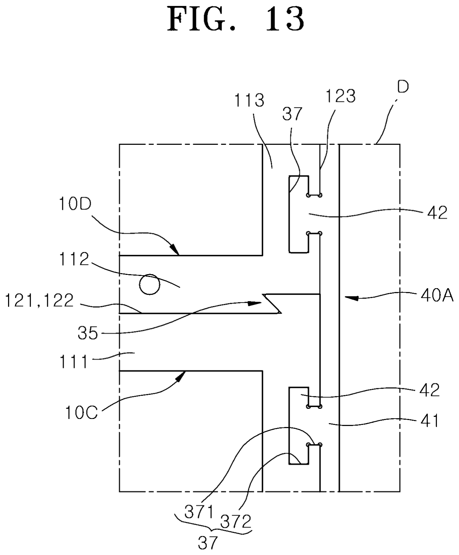

FIG. 10 is an enlarged view of a region "A" of FIG. 9; FIG. 11 is an enlarged view of a region "B" of FIG. 9; FIG. 12 is an enlarged view of a region "C" of FIG. 9; and FIG. 13 is an enlarged view of a region "D" of FIG. 9.

Referring to FIGS. 10 to 13, the first connecting portion 31 according to an embodiment of the present disclosure may include a male assembly part 32 and a female assembly part 33.

The male assembly part 32 and the female assembly part 33 may be respectively formed on the first surface 121 and the second surface 122 of the housings 10, which face each other in the vertical direction when the plurality of housings 10 are stacked. The male assembly part 32 may be formed to protrude from the first surface 121, e.g., an upper surface of the housing 10. The female assembly part 33 may be formed to be recessed into the second surface 122, e.g., a lower surface of the housing 10. The female assembly part 33 may have a shape that allows the male assembly part 32 to be inserted thereinto.

In an embodiment, the male assembly part 32 may have a structure of a linear rail and may be formed to extend in the front-rear direction. The female assembly part 33 may have a linear shape corresponding to the male assembly part 32 and may be formed at a position facing the male assembly part 32. In an embodiment, a plurality of male assembly parts 32 may be formed, and the female assembly parts 33 may be formed at positions corresponding thereto.

The male assembly part 32 formed on an upper surface of the first housing 10A may be fitted into the female assembly part 33 formed on a lower surface of the second housing 10B. As the male assembly part 32 has a shape protruding upward and is fitted into the female assembly part 33, the male assembly part 32 formed on the upper surface of the first housing 10A may prevent or substantially prevent the second housing 10B from moving in the lateral direction.

The male assembly part 32 may include a first protrusion 321 and a second protrusion 322.

The first protrusion 321 may be formed to protrude from the first surface 121 in the first direction (the X direction). The second protrusion 322 may be formed at an end of the first protrusion 321 and may have a width greater than that of the first protrusion 321. The female assembly part 33 may have a shape corresponding to the male assembly part 32, and the male assembly part 32 may be fitted thereinto. In an embodiment, the second protrusion 322 has a width greater than that of the first protrusion 321, and the second protrusion 322 may prevent or substantially prevent the second housing 10B from moving in the vertical direction.

In an embodiment, the second protrusion 322 has the width greater than that of the first protrusion 321, and the first protrusion 321 and the second protrusion 322 may have widths that are clearly distinguished from each other to the extent that a step is formed at a boundary therebetween. For example, the first protrusion 321 may have a rectangular cross-sectional shape, and the second protrusion 322 may have a rectangular cross-sectional shape with a greater width. That is, in an embodiment, the male assembly part 32 may have a "T"-shaped cross section. With such a structure, the first protrusion 321 and the second protrusion 322 may be in stable contact with the female assembly part 33 in the vertical and lateral directions at a plurality of positions spaced apart from each other.

In an embodiment, at least one of the left-side and right-side surfaces of the male assembly part 32 may be formed to be inclined from the first protrusion 321 to the second protrusion 322. If the male assembly part 32 has inclined side surfaces as described above, even though the second protrusion 322 has a width greater than that of the first protrusion 321, a distinct boundary may not be formed between the first protrusion 321 and the second protrusion 322. With such a structure, stress may be prevented or substantially prevented from concentrating at a boundary between the first protrusion 321 and the second protrusion 322.

The first connecting portion 31 according to an embodiment of the present disclosure may include an intermediate connecting part 34 and end connecting parts 35.

The intermediate connecting part 34 may connect the first housing 10A and the second housing 10B to each other at intermediate portions of the first surface 121 and the second surface 122 in the lateral direction. The intermediate connecting part 34 may include the male assembly part 32 and the female assembly part 33, and, in an embodiment, the male assembly part 32 may have a "T"-shaped structure including the first protrusion 321 and the second protrusion 322 having different widths.

The end connecting parts 35 may connect the first housing 10A and the second housing 10B to each other at edge portions of each of the first surface 121 and the second surface 122. The end connecting part 35 may be formed at left-side and right-side portions of each of the first surface 121 and the second surface 122. The end connecting part 35 may include the male assembly part 32 and the female assembly part 33, and, in an embodiment, the male assembly part 32 may include the first protrusion 321 and the second protrusion 322 having side surfaces that are continuously inclined.

The second connecting portion 36 may have a structure that allows the housings 10 to be connected to each other in the second direction (the lateral direction, or the Y direction) perpendicular to the first direction (the X direction). In an embodiment, the second connecting portion 36 may have a structure that allows the housings 10 to be connected to each other using a separate intermediate member corresponding to a wedge 39 (to be described below). When stacking the plurality of battery modules 3 to configure the module assembly 2, the housings 10 adjacent to each other in the lateral direction may be connected to each other by the second connecting portion 36.

The second connecting portion 36 according to an embodiment of the present disclosure may include a first groove 37, a second groove 38, and the wedge 39.

The first groove 37 and the second groove 38 may be respectively formed on the third surface 123 and the fourth surface 124 of the housings 10 that face each other when the plurality of housings 10 are disposed adjacent to each other in the lateral direction. The first groove 37 may be formed to be recessed into the third surface 123, which is the right-side surface of the housing 10. The second groove 38 may be formed to be recessed into the fourth surface 124, which is the left-side surface of the housing 10.

The first groove 37 may have a linear shape and may be formed to extend in the front-rear direction. The second groove 38 may have a linear shape corresponding to the first groove 37 and may be formed at a position facing the first groove 37. In an embodiment, a plurality of first grooves 37 may be formed, and the second grooves 38 may be formed at positions corresponding thereto.

The first groove 37 formed in the first housing 10A and the second groove 38 formed in the third housing 10C may be disposed to face each other. The first groove 37 formed in the first housing 10A and the second groove 38 formed in the third housing 10C may be in communication with each other to form an insertion space S2.

The first groove 37 may include a first step groove 371 and a second step groove 372.

The first step groove 371 may be formed in the third surface 123 to be recessed in the second direction (the Y direction) and may face the second groove 38. The second step groove 372 may be formed at an end of the first step groove 371 with a width greater than that of the first step groove 371. In an embodiment, the second groove 38 may have a shape symmetrical to that of the first groove 37. Similar to the first groove 37, the second groove 38 may include the first step groove 371 and the second step groove 372.

In an embodiment, the second step groove 372 has a width greater than that of the first step groove 371, and the first step groove 371 and the second step groove 372 may have widths that are clearly distinguished from each other to the extent that a step is formed at a boundary therebetween. In an embodiment, for example, the first step groove 371 may have a rectangular cross-sectional shape, and the second step groove 372 may have a rectangular cross-sectional shape having a greater width. In an embodiment, the first groove 37 may have a "T"-shaped cross section. With such a structure, the wedge 39 may stably come into contact with the first groove 37 and the second groove 38 in the vertical and lateral directions at a plurality of positions spaced apart from each other.

In an embodiment, although not illustrated in the drawings, at least one of an upper surface and a lower surface of the first groove 37 may be formed to be inclined from the first step groove 371 to the second step groove 372. In an embodiment, the first groove 37 has an inclined inner surface as described above, and even though the second step groove 372 has a width greater than that of the first step groove 371, a distinct boundary may not be formed between the first step groove 371 and the second step groove 372. With such a structure, stress may be prevented or substantially prevented from concentrating at the boundary between the first step groove 371 and the second step groove 372.

The wedge 39 may be inserted into the insertion space S2 formed between the housings 10 by the facing first and second grooves 37 and 38. The wedge 39 may be inserted into the insertion space S2 formed between the housings 10 by the facing first and second grooves 37 and 38. The wedge 39 may have a cross-sectional shape corresponding to the insertion space S2.

The wedge 39 may have right- and left-side portions respectively shaped to correspond to the first groove 37 and the second groove 38, and may be inserted into the insertion space S2. In an embodiment, the wedge 39 may have an "H"-shaped cross section. When the wedge 39 is fitted into the insertion space S2, the first housing 10A and the third housing 10C may be connected to each other by the wedge 39. The first housing 10A and the third housing 10C may be brought into contact (e.g., close contact) with each other in the lateral direction by the wedge 39, and may be prevented or substantially prevented from moving in the lateral direction.

The housing assembly 4 may include a plurality of horizontal extension parts (not denoted by a reference numeral) that support loads in the vertical direction and a plurality of vertical extension parts (not denoted by a reference numeral) that support loads in the lateral direction. The horizontal extension parts may have a shape extending in the lateral direction and may be arranged to be spaced apart from each other in the vertical direction. The vertical extension parts may have a shape extending in the vertical direction and may be arranged to be spaced apart from each other in the lateral direction.

The plurality of horizontal extension parts and the plurality of vertical extension parts may be formed by connecting the plurality of housings 10 to each other using the connecting portions 30. When the plurality of housings 10 are connected to each other by the connecting portions 30, a framework of the housing assembly 4 may have a thickness corresponding to two overlapping housings 10. The horizontal extension part of the housing assembly 4 may have a thickness equal to the combined thickness of the first body part 111 of the first housing 10A and the second body part 112 of the second housing 10B. The vertical extension part of the housing assembly 4 may have a thickness equal to the combined thickness of the third body part 113 of the first housing 10A and the fourth body part 114 of the third housing 10C.

As described above, when the plurality of housings 10 are connected to each other by the connecting portions 30, the housing assembly 4 may form the horizontal extension part and the vertical extension part with a thickness corresponding to twice that of the first to fourth body parts 111 to 114 of the housing 10. Accordingly, the housing assembly 4 may stably secure sufficient rigidity to reliably support a weight of the plurality of battery cell assemblies 20 or the plurality of battery modules 3.

When the first module assembly 2A and the second module assembly 2B are disposed in parallel in the lateral direction, a left-side surface of the first module assembly 2A and a right-side surface of the second module assembly 2B may be exposed to an external environment. In this case, the plurality of second grooves 38 formed in the first module assembly 2A and the plurality of first grooves 37 formed in the second module assembly 2B may be located on left-side and right-side surfaces of the housing assembly 4. By using the plurality of first grooves 37 and the plurality of second grooves 38, the reinforcing members 40 may be assembled and coupled to the left-side and right-side surfaces of the housing assembly 4.

Referring to FIGS. 7 to 9, the reinforcing member 40 according to an embodiment of the present disclosure may include a support 41 and a coupling protrusion 42.

The support 41 may be formed to extend in the first direction (the vertical direction, or the X direction) and may come into contact with the plurality of housings 10 in the second direction (the lateral direction, or the Y direction). The support 41 may have a form of a flat plate and may come into surface contact with the side surfaces of the housings 10. In an embodiment, the support 41 may have a length corresponding to the module assembly 2 and may be in continuous contact with the plurality of housings 10 stacked in the vertical direction.

The coupling protrusion 42 may be formed to protrude from a surface of the support 41 that faces the housing 10. A plurality of coupling protrusions 42 may be disposed apart from each other at intervals in the first direction (the vertical direction, or the X direction). The coupling protrusions 42 may be formed at positions corresponding to the first grooves 37 and the second grooves 38. The coupling protrusions 42 may be fitted into the plurality of first grooves 37 or the plurality second grooves 38 formed in different housings 10.

The coupling protrusion 42 may have a cross-sectional shape corresponding to the first groove 37 and may be fitted into the first groove 37. In addition, the coupling protrusion 42 may have a cross-sectional shape corresponding to the second groove 38 and may be fitted into the second groove 38. In an embodiment, the first groove 37 and the second groove 38 may each have a "T"-shaped cross section, and the coupling protrusion 42 may have a "T"-shaped cross section corresponding to the first groove 37 and the second groove 38.

The reinforcing member 40 according to an embodiment of the present disclosure may include a first reinforcing member 40A and a second reinforcing member 40B.

The first reinforcing member 40A may be in contact with the housing assembly 4 at the right side and may be coupled to the plurality of first grooves 37. The first reinforcing member 40A may include the support 41 and the coupling protrusions 42. In an embodiment, the first reinforcing member 40A may have a rod or column shape extending in the vertical direction, and a plurality of first reinforcing members 40A may be provided. The first reinforcing member 40A may have a front-rear width smaller than a front-rear width of the right-side surface of the housing assembly 4, and one or a plurality of first reinforcing members 40A may be coupled to the housing assembly 4. In an embodiment, the first reinforcing member 40A may include a metallic material capable of reinforcing rigidity of the housing assembly 4.

The second reinforcing member 40B may be in contact with the housing assembly 4 at the left side and may be coupled to the plurality of second grooves 38. The second reinforcing member 40B may include the support 41 and the coupling protrusion 42. In an embodiment, the second reinforcing member 40B may have a rod or column shape extending in the vertical direction, and a plurality of second reinforcing members 40B may be provided. The second reinforcing member 40B may have a front-rear width smaller than the front-rear width of the left-side surface of the housing assembly 4, and one or a plurality of second reinforcing members 40B may be coupled to the housing assembly 4. In an embodiment, the second reinforcing member 40B may include a metallic material capable of reinforcing the rigidity of the housing assembly 4.

The first reinforcing member 40A may be coupled to the right-side surface of the second module assembly 2B, and the second reinforcing member 40B may be coupled to the left-side surface of the first module assembly 2A. In an embodiment, the first reinforcing member 40A is coupled to the right-side surface of the housing assembly 4, and the first reinforcing member 40A may reinforce the rigidity of a right-side portion of the housing assembly 4. In an embodiment, the second reinforcing member 40B is coupled to the left-side surface of the housing assembly 4, and the second reinforcing member 40B may reinforce the rigidity of a left-side portion of the housing assembly 4.

When the reinforcing members 40 are coupled to the side surfaces of the housing assembly 4, the left-side and right-side portions of the housing assembly 4 may each have a thickness equal to the combined thickness of the housing 10 and the reinforcing member 40. The right-side portion of the housing assembly 4 may have a thickness equal to the combined thickness of the third body part 113 of the third housing 10C and the support 41 of the first reinforcing member 40A. The left-side portion of the housing assembly 4 may have a thickness equal to the combined thickness of the fourth body part 114 of the first housing 10A and the support 41 of the second reinforcing member 40B. Accordingly, rigidity of the side portions of the housing assembly 4 may be reinforced by the reinforcing members 40.

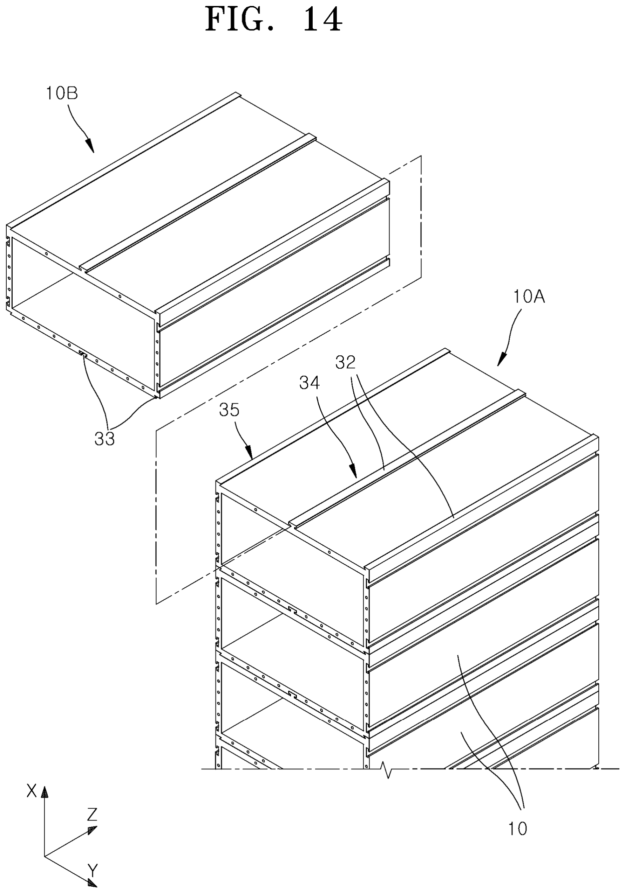

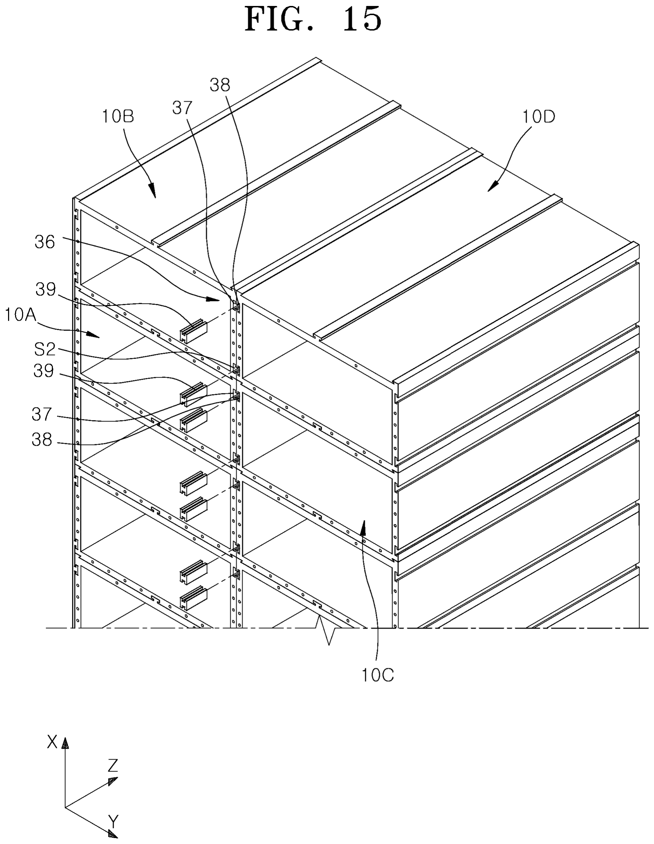

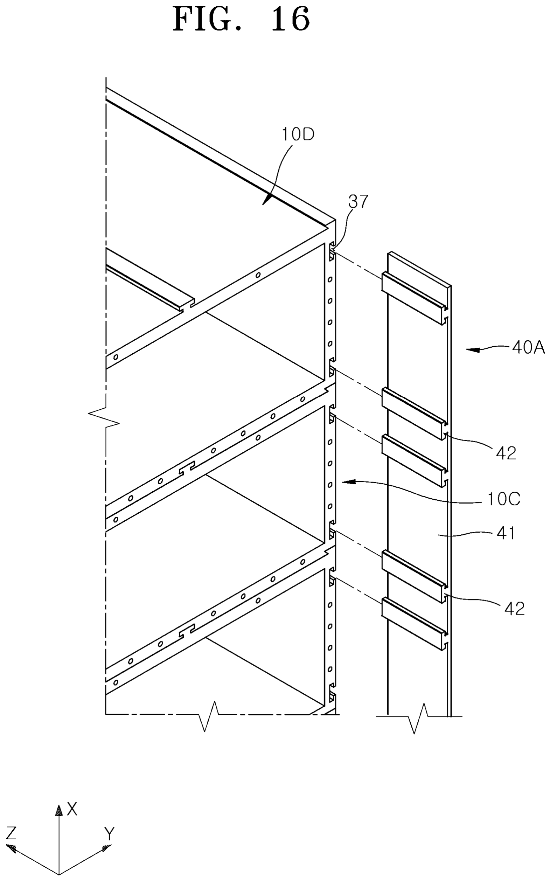

FIG. 14 is a view illustrating an assembly process of connecting the housings according to an embodiment of the present disclosure in the first direction; FIG. 15 is a view illustrating an assembly process of connecting the housings according to an embodiment of the present disclosure in the second direction; and FIG. 16 is a view illustrating a process of assembling the reinforcing member to the housings according to an embodiment of the present disclosure.

Referring to FIG. 14, the housings 10 according to an embodiment of the present disclosure may be coupled and assembled to be stacked in the vertical direction by sliding the housings 10 in the front-rear direction while the male assembly parts 32 and the female assembly parts 33 are disposed to correspond to each other in the front-rear direction.

In connecting the second housing 10B to an upper side of the first housing 10A in a stacked manner, the second housing 10B may be connected to an upper portion of the first housing 10A through an assembly process in which a rear portion of the female assembly part 33 formed in the second housing 10B is located to correspond to a front portion of the male assembly part 32 formed in the first housing 10A, and the second housing 10B is pushed rearward.

In this case, the first housing 10A and the second housing 10B may be firmly connected at three positions corresponding to the intermediate connecting part 34 and a pair of end connecting parts 35 on the left and right sides through the coupling between the male assembly part 32 and the female assembly part 33 as described above. Accordingly, the second housing 10B may be reliably assembled at a position (e.g., a predetermined position) on the upper side of the first housing 10A, and movement thereof in the vertical and lateral directions may be stably restricted.

Referring to FIG. 15, the housings 10 according to an embodiment of the present disclosure may be coupled to each other and assembled in the lateral direction by inserting the wedge 39 into the insertion space S2 in the front-rear direction while the first groove 37 and the second groove 38 are disposed to face each other in the lateral direction, the insertion space S2 being formed by the first groove 37 and the second groove 38.

In connecting the third housing 10C to a right side of the first housing 10A, the second groove 38 formed in the third housing 10C may be located to correspond to the first groove 37 formed in the first housing 10A, and, in this state, the insertion space S2 may be formed to extend continuously in the front-rear direction between the first housing 10A and the third housing 10C. The wedge 39 may be disposed between the first housing 10A and the third housing 10C through the insertion space S2.

Front and rear ends of the insertion space S2 may be formed to be respectively open to front and rear portions of each of the first housing 10A and the third housing 10C. The third housing 10C may be connected to the right side of the first housing 10A through an assembly process in which the wedge 39 is inserted into the insertion space S2 in the front-rear direction from at least one of front and rear sides of the insertion space S2.

The plurality of first grooves 37 may be formed on the right-side surface of the housing 10 and may be disposed apart from each other in the vertical direction. The plurality of second grooves 38 may be formed on the left-side surface of the housing 10 and may be disposed apart from each other in the vertical direction.

The first housing 10A and the third housing 10C may be coupled to each other by the wedge 39 at a plurality of positions corresponding to the plurality of first grooves 37 and the plurality of second grooves 38, as described above. Accordingly, the third housing 10C may be reliably assembled at a position (e.g., a predetermined position) on the right side of the first housing 10A, and movement thereof in the vertical and lateral directions may be stably restricted.

Referring to FIG. 16, the reinforcing member 40 according to an embodiment of the present disclosure may be coupled and assembled to be stacked on the side surface of the housing assembly 4 by sliding the reinforcing member 40 in the front-rear direction while the plurality of coupling protrusions 42, the plurality of first grooves 37, and the plurality of second grooves 38 are disposed to correspond to each other in the front-rear direction.

The first groove 37 and the second groove 38 may each be formed on the side surface of the housing 10 to continuously extend in the front-rear direction. Front and rear ends of each of the first groove 37 and the second groove 38 may be formed to be open in the front-rear direction. The reinforcing member 40 may be connected to the side surface of the housing assembly 4 through an assembly process in which the coupling protrusions 42 are inserted in the front-rear direction into the first groove 37 and the second groove 38 from at least one of the front and rear sides of the insertion space S2.

In assembling the first reinforcing member 40A to the right-side surface of the housing assembly 4, the first reinforcing member 40A may be coupled and assembled to be stacked on the right-side surface of the housing assembly 4 by sliding the first reinforcing member 40A in the front-rear direction while the plurality of coupling protrusions 42 are located to correspond to the plurality of first grooves 37 formed on right-side surfaces of the third housing 10C and the fourth housing 10D.

A plurality of first reinforcing members 40A may be provided, and the plurality of first reinforcing members 40A may be arranged in the front-rear direction. Among the plurality of first reinforcing members 40A, one located relatively toward the front may be fitted into the first groove 37 by being slid from a front side to a rear side of the first groove 37. Among the plurality of first reinforcing members 40A, one located relatively toward the rear may be fitted into the first groove 37 by being slid from the rear side to the front side of the first groove 37.

The reinforcing member 40 may be coupled to the housing assembly 4 at a plurality of positions corresponding to the plurality of first grooves 37 and the plurality of second grooves 38 formed in the housing assembly 4, as described above. Accordingly, the reinforcing member 40 may be reliably assembled at a position (e.g., a predetermined position) on the side surface of the housing assembly 4, and movement thereof in the vertical and lateral directions may be stably restricted.

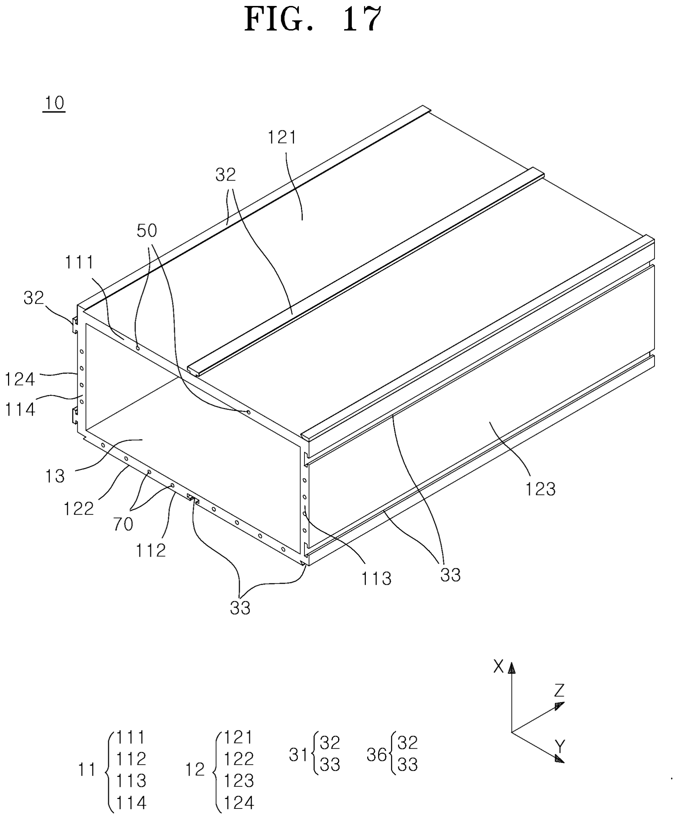

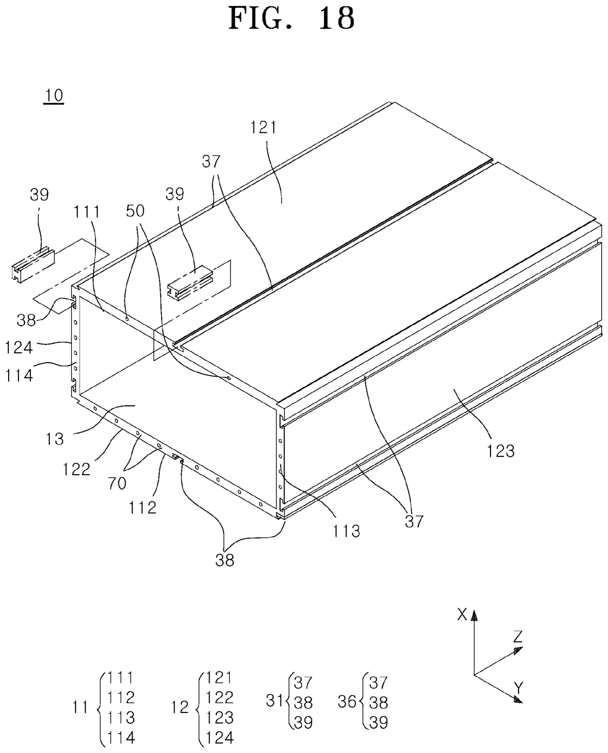

FIG. 17 is a perspective view schematically illustrating a housing according to another embodiment of the present disclosure; and FIG. 18 is a perspective view schematically illustrating a housing according to another embodiment of the present disclosure.

According to the embodiment described with reference to FIGS. 5 to 16, the first connecting portion 31 for coupling the housings 10 to each other in the first direction (the vertical direction, or the X direction) and the second connecting portion 36 for coupling the housings 10 to each other in the second direction (the lateral direction, or the Y direction) perpendicular to the first direction (the X direction) may have different structures from each other.

The first connecting portion 31 may have a structure including the male assembly part 32 and the female assembly part 33, and the second connecting portion 36 may have a structure including the first groove 37, the second groove 38, and the wedge 39. According to a connecting structure in which the male assembly part 32 and the female assembly part 33 are assembled with each other, the housings 10 may be directly connected to each other without a separate intermediate member. According to a connecting structure in which the wedge 39 functioning as an intermediate member is inserted into the first groove 37 and the second groove 38, the housings 10 may be in stable and easy surface contact with each other without interference from a protrusion corresponding to the male assembly part 32.

Referring to FIG. 17, a first connecting portion 31 and a second connecting portion 36 may both have a structure including the male assembly part 32 and the female assembly part 33. When both the first connecting portion 31 and the second connecting portion 36 have a structure including the male assembly part 32 and the female assembly part 33, housings 10 may be directly connected to each other in the vertical direction as well as in the lateral direction through male-female assembly.

When an energy storage system 1 according to the present disclosure has a structure composed of one module assembly 2, a housing assembly 4 may be completed by assembling the housings 10 to each other in the vertical direction in a male-female manner using the first connecting portion 31, which includes the male assembly part 32 and the female assembly part 33. When the energy storage system 1 according to the present disclosure has a structure including a plurality of module assemblies 2, the housing assembly 4 may be completed by assembling the housings 10 to each other in the lateral direction in a male-female manner using the second connecting portion 36, which includes the male assembly part 32 and the female assembly part 33, without additionally providing a separate intermediate member.

Referring to FIG. 18, a first connecting portion 31 and a second connecting portion 36 may both have a structure including the first groove 37, the second groove 38, and the wedge 39. When both the first connecting portion 31 and the second connecting portion 36 have a structure including the first groove 37, the second groove 38, and the wedge 39, housings 10 may be easily disposed in surface contact with each other in the vertical and lateral directions without being lifted or tilted due to interference with the male assembly part 32 formed to protrude from an outer surface of the housing 10.

When an energy storage system 1 according to the present disclosure has a structure composed of one module assembly 2, the housing assembly 4 may be completed by coupling the housings 10 to each other in the vertical direction using the first connecting portion 31, which includes the first groove 37, the second groove 38, and the wedge 39. When the energy storage system 1 according to the present disclosure has a structure including a plurality of module assemblies 2, the housing assembly 4 may be completed by coupling the housings 10 to each other in the lateral direction using the second connecting portion 36 including the first groove 37, the second groove 38, and the wedge 39.

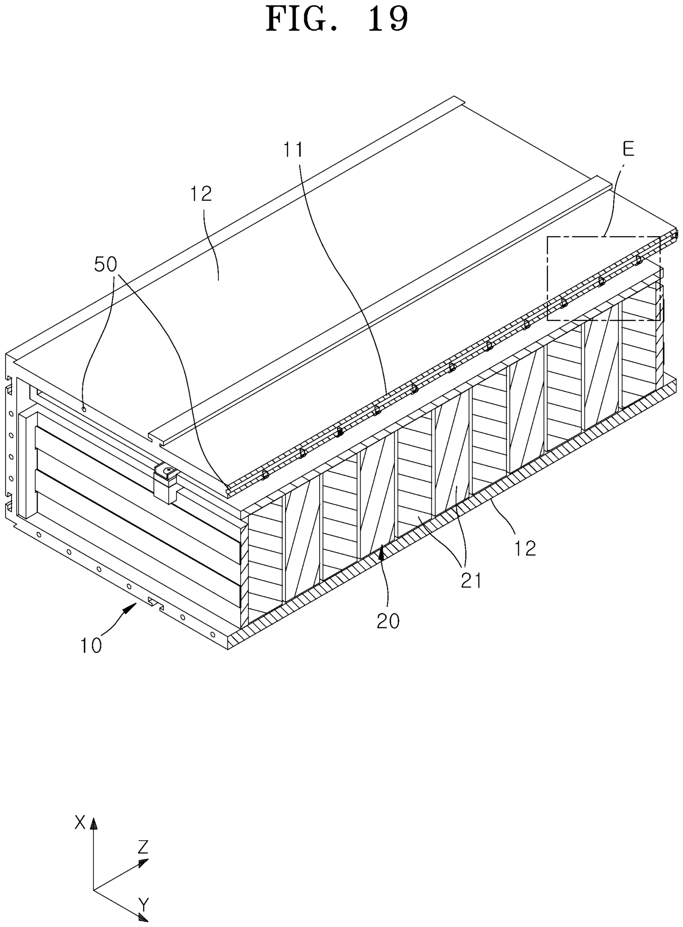

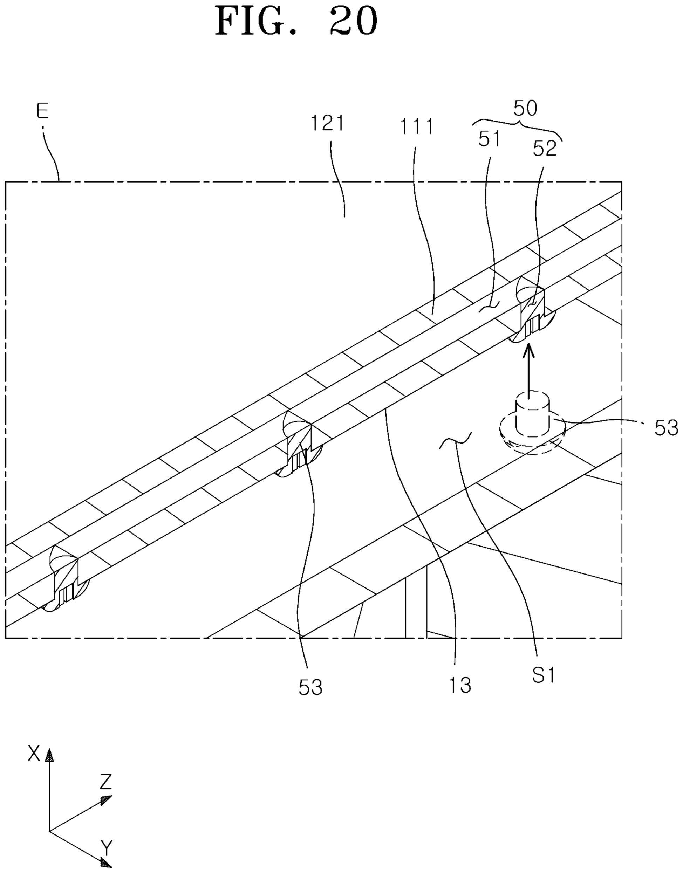

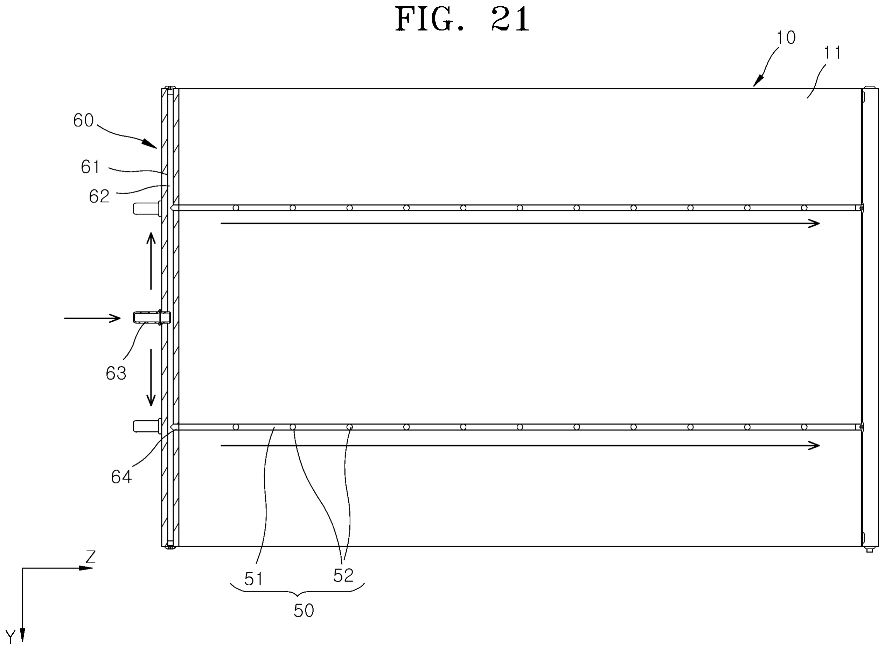

FIG. 19 is a schematic cross-sectional view of a main portion of the battery module according to an embodiment of the present disclosure; FIG. 20 is an enlarged view of a region "E" of FIG. 19; and FIG. 21 is a conceptual view illustrating the flow of a fire-extinguishing agent through the injection flow path and the fire-extinguishing manifold according to an embodiment of the present disclosure.

Referring to FIGS. 19 and 20, the injection flow path 50 according to an embodiment of the present disclosure may include a transfer flow path 51, an open flow path 52, and a plug 53.

The transfer flow path 51 may be formed in a form of a hole passing through the housing body 11. In an embodiment, the transfer flow path 51 is formed to extend in the front-rear direction in the housing body 11, and a fire-extinguishing agent may be transferred from the front side to the rear side of the housing body 11 along the transfer flow path 51. The fire-extinguishing agent may also be transferred from the rear side to the front side of the housing body 11 along the transfer flow path 51.

The transfer flow path 51 may be formed to extend in the front-rear direction in the first body part 111, and a plurality of transfer flow paths 51 may be disposed apart from each other in the lateral direction. A fluid may be introduced into an inside of the first body part 111 through the transfer flow paths 51 and may pass through the inside of the first body part 111 in the front-rear direction.

In an embodiment, the housing 10 may have a form that extends continuously in the front-rear direction with a uniform (uniform or substantially uniform) cross-sectional shape through an extrusion process. The transfer flow path 51 may be formed during the extrusion process of the housing 10 and may have a straight shape extending continuously in the front-rear direction. The transfer flow path 51 may be formed to traverse the housing 10 in the front-rear direction. The transfer flow path 51 may also be formed to pass through the housing 10 in the front-rear direction or another direction through a process such as drilling, and, in an embodiment, may be formed in a shape of a groove.

The open flow path 52 may be formed to extend from the transfer flow path 51 to the cell receiving surface 13 and may be formed to be open toward the internal space S1. A first end of the open flow path 52 may be in contact with the transfer flow path 51, and a second end thereof may be in contact with the internal space S1 of the housing 10. The open flow path 52 may be in communication with the transfer flow path 51, thereby allowing a fluid flowing through the transfer flow path 51 to be introduced and injected into the internal space S1 through the open flow path 52.

A plurality of open flow paths 52 may be disposed apart from each other in an extension direction of the transfer flow path 51. The plurality of open flow paths 52 may be disposed apart from each other in the front-rear direction at intervals (e.g., set intervals) from the front portion to a rear portion of the housing 10. In an embodiment, the plurality of open flow paths 52 may be disposed at uniform (uniform or substantially uniform) intervals in the front-rear direction. The fluid passing through the transfer flow path 51 may be introduced and injected into the internal space S1 at a plurality of positions spaced apart from each other through the plurality of open flow paths 52.

The open flow path 52 may be formed to pass through the housing 10 from the cell receiving surface 13 to the transfer flow path 51. In an embodiment, the open flow path 52 may be formed to pass through the internal space S1 to the transfer flow path 51 formed in the first body part 111, by machining, such as drilling. When the transfer flow path 51 is formed in the first body part 111, the open flow path 52 may be formed to vertically pass through a portion of the first body part 111 that faces the internal space S1.

A plurality of battery cells 21 (to be described below) provided in the battery cell assembly 20 may be arranged in the front-rear direction, and the transfer flow path 51 may be formed to extend in the front-rear direction along the arrangement direction of the battery cells 21. In an embodiment, the plurality of open flow paths 52 may be disposed at uniform or substantially uniform intervals along the transfer flow path 51 to uniformly or substantially uniformly inject a fire-extinguishing agent over the entire plurality of battery cells 21.

The plug 53 may be coupled to an injection end of the open flow path 52 to close the open flow path 52, and may be melted at a certain (e.g., set) temperature or higher to open the open flow path 52. The certain (e.g., set) temperature may be a temperature occurring when the energy storage system 1 is in an abnormal state, such as during a fire or flame occurrence. The certain (e.g., set) temperature may be higher than a normal temperature that occurs when the energy storage system 1 operates normally.

In an embodiment, the plug 53 may be formed of a material having a low melting point such that the material melts at the certain (e.g., set) temperature. In an embodiment, the plug 53 may include a plastic material. The plug 53 may have a structure of a stopper or cap capable of closing the open flow path 52, and may be fitted into the injection end of the open flow path 52 from the internal space S1 side. In an embodiment, the plug 53 may have a screw-type structure.

During normal operation of the energy storage system 1, the open flow path 52 may remain in the closed state by the plug 53. At this time, a fire-extinguishing agent may be filled in the transfer flow path 51 and the open flow path 52. If a fire or flame occurs, the plug 53 may melt and be removed, thereby opening the open flow path 52 and allowing the fire-extinguishing agent to be injected into the internal space S1 and the battery cell assembly 20.

The fire-extinguishing manifold 60 according to an embodiment of the present disclosure may include a manifold body 61, a main flow path 62, an inlet flow path 63, and a transfer flow path 64.

The manifold body 61 may have a block shape and may be coupled to the housing body 11. When the injection flow path 50 is formed to pass through the first body part 111 in the front-rear direction, the manifold body 61 may have the shape of a block corresponding to a front surface of the first body part 111 and may be coupled to the front surface of the first body part 111. The front surface of the first body part 111 may have a certain (e.g., set) thickness in the vertical direction and a rectangular shape extending in the lateral direction, and the manifold body 61 may have a shape of a hexahedral block having a rectangular rear surface corresponding to the front surface of the first body part 111.

The main flow path 62 may be formed inside the manifold body 61. The manifold body 61 may be formed to extend in the lateral direction, and the main flow path 62 may be formed to extend in the lateral direction along the extension direction of the manifold body 61. The main flow path 62 may be formed to extend along positions corresponding to the plurality of injection flow paths 50, and may have a length greater than an interval between the plurality of injection flow paths 50.

The inlet flow path 63 may be connected to the main flow path 62 and may be located to be open to the outside of the housing body 11. When the manifold body 61 is coupled to the front surface of the first body part 111, the inlet flow path 63 may be located on a front side of the main flow path 62. The inlet flow path 63 may be formed to protrude from or recessed into the manifold body 61.

The transfer flow path 64 may be connected to the main flow path 62 at a position spaced apart from the inlet flow path 63 and may be in contact with the injection flow path 50. When the manifold body 61 is coupled to the front surface of the first body part 111, the transfer flow path 64 may be located at a rear side of the main flow path 62, and a plurality of transfer flow paths 64 may be located to correspond to the injection flow paths 50. A front portion of the transfer flow path 64 may be in communication with the main flow path 62, and a rear portion of the transfer flow path 64 may be in contact with the transfer flow path 51.

The fire-extinguishing agent supplied from the front side of the housing 10 to the inlet flow path 63 may be distributed in the lateral direction along the main flow path 62, branched into the plurality of transfer flow paths 64 located at the rear side of the main flow path 62, and then concurrently (e.g., simultaneously) introduced into the plurality of injection flow paths 50. The fire-extinguishing agent introduced into the injection flow path 50 may move rearward along the transfer flow path 51 and may be injected into the internal space S1 through the plurality of open flow paths 52.

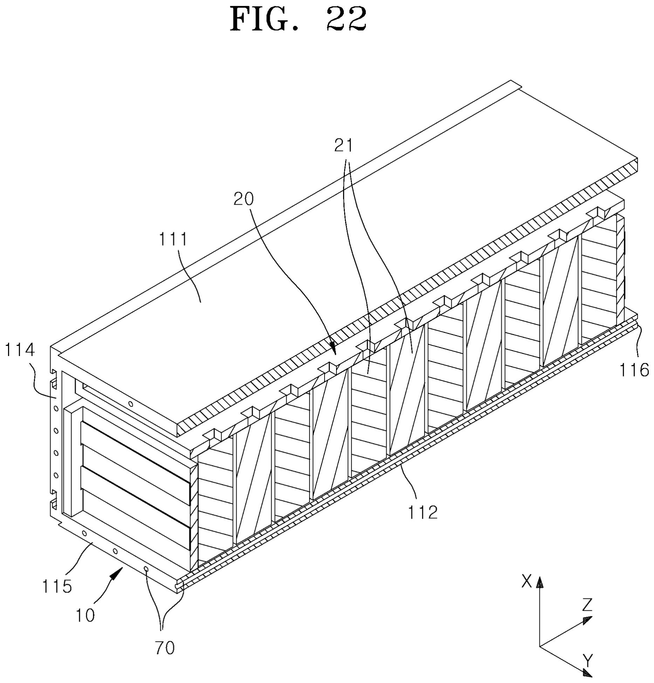

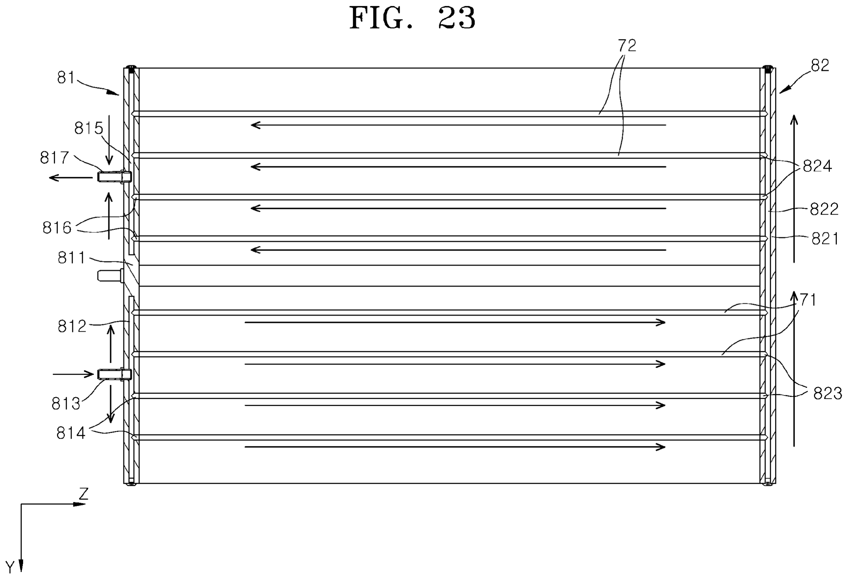

FIG. 22 is a schematic cross-sectional view of a main portion of the battery module according to an embodiment of the present disclosure; and FIG. 23 is a conceptual view for describing the flow of a coolant by the cooling flow path and the cooling manifold according to an embodiment of the present disclosure.

Referring to FIGS. 22 and 23, the cooling flow path 70 according to an embodiment of the present disclosure may include a forward flow path 71 and a return flow path 72.

The forward flow path 71 may form a flow path through which a coolant can flow from a first end 115 toward a second end 116 of the housing 10. The first end 115 may correspond to a front surface of the housing body 11, and the second end 116 may correspond to a rear surface of the housing body 11. The forward flow path 71 may be formed in at least one of the second body part 112, the third body part 113, and the fourth body part 114 that are in contact with the battery cell assembly 20.

If formed in the second body part 112, the forward flow path 71 may be formed to pass through the second body part 112 from a front surface to a rear surface and may have a linear shape, and a plurality of forward flow paths 71 may be arranged in the lateral direction. If formed in the third body part 113, the forward flow path 71 may be formed to pass through the third body part 113 from a front surface to a rear surface and may have a linear shape, and the plurality of forward flow paths 71 may be arranged in the vertical direction. If formed in the fourth body part 114, the forward flow path 71 may be formed to pass through the fourth body part 114 from a front surface to a rear surface and may have a linear shape, and the plurality of forward flow paths 71 may be arranged in the vertical direction.

The return flow path 72 may form a flow path through which the coolant, which has passed through the forward flow path 71, can flow toward the first end 115. The return flow path 72 may be disposed apart from the forward flow path 71. The return flow path 72 may be formed, together with the forward flow path 71, in at least one of the second body part 112, the third body part 113, and the fourth body part 114.

The plurality of forward flow paths 71 may be formed to extend in the front-rear direction on one of left and right sides of the second body part 112, and a plurality of return flow paths 72 may be formed to extend in the front-rear direction on the other of the left and right sides. The plurality of forward flow paths 71 may be formed to extend in the front-rear direction on one of upper and lower sides of each of the third and fourth body part 113 and 114, and the plurality of return flow paths 72 may be formed to extend in the front-rear direction on the other of the upper and lower sides.

If formed in the second body part 112, the return flow path 72 may be formed to pass through the second body part 112 from the front surface to the rear surface and may have a linear shape, and the plurality of return flow paths 72 may be arranged in the lateral direction. If formed in the third body part 113, the return flow path 72 may be formed to pass through the third body part 113 from the front surface to the rear surface and may have a linear shape, and the plurality of return flow paths 72 may be arranged in the vertical direction. If formed in the fourth body part 114, the return flow path 72 may be formed to pass through the fourth body part 114 from the front surface to the rear surface and may have a linear shape, and the plurality of return flow paths 72 may be arranged in the vertical direction.

The forward flow path 71 and the return flow path 72 may each be formed in a form of a hole passing through the housing body 11. In an embodiment, the forward flow path 71 and the return flow path 72 are formed to extend in the front-rear direction in the housing body 11, and a coolant may be transferred from the front side to the rear side of the housing body 11 through the forward flow path 71 and may be returned from the rear side to the front side through the return flow path 72.

A fluid may be introduced into interiors of the second body part 112, the third body part 113, and the fourth body part 114 through the forward flow paths 71, and may pass through the interiors of the second body part 112, the third body part 113, and the fourth body part 114 from the front side to the rear side. The fluid that has passed through the housing 10 in the front-rear direction may be reintroduced into the interiors of the second body part 112, the third body part 113, and the fourth body part 114 through the return flow paths 72, and may pass through the interiors of the second body part 112, the third body part 113, and the fourth body part 114 from the rear side to the front side.

In an embodiment, the housing 10 may have a form that extends continuously in the front-rear direction with a uniform cross-sectional shape through an extrusion process. In an embodiment, the forward flow path 71 and the return flow path 72 may be formed during an extrusion process of the housing 10 and may each have a straight shape extending continuously in the front-rear direction. The forward flow path 71 and the return flow path 72 may be formed to traverse the housing 10 in the front-rear direction. The forward flow path 71 and the return flow path 72 may also be formed to pass through the housing 10 in the front-rear direction or another direction through a process, such as drilling.

The cooling manifold 80 according to an embodiment of the present disclosure may include a first cooling manifold 81 and a second cooling manifold 82.

The first cooling manifold 81 may have a shape corresponding to a portion of the first end 115 of the housing 10 and may be coupled to the first end 115. A flow path through which a coolant is supplied and transferred to the forward flow path 71, and a flow path through which the coolant, which has passed through the return flow path 72, is discharged to the outside may be formed in the first cooling manifold 81.

The first cooling manifold 81 according to an embodiment of the present disclosure may include a first block 811, a supply main flow path 812, a first inlet flow path 813, a second inlet flow path 814, a discharge main flow path 815, a first discharge flow path 816, and a second discharge flow path 817.

The first block 811 may have a block shape and may be coupled to the housing body 11. In an embodiment, the forward flow path 71 is formed to pass through the second body part 112 in the front-rear direction, and the first block 811 may have a block shape corresponding to the front surface of the second body part 112 and may be coupled to the front surface of the second body part 112. The front surface of the second body part 112 may have a certain (e.g., set) thickness in the vertical direction and a rectangular shape extending in the lateral direction, and the first block 811 may have the shape of a hexahedral block having a rectangular rear surface corresponding to the front surface.

The supply main flow path 812 may be formed inside the first block 811. The supply main flow path 812 may be formed to extend in the lateral direction along the first block 811. The supply main flow path 812 may be formed to extend along positions corresponding to the plurality of forward flow paths 71 and may have a length greater than an interval between the plurality of forward flow paths 71.

The first inlet flow path 813 may be connected to the supply main flow path 812 and may be located to be open to the outside of the housing body 11. In an embodiment, the first block 811 is coupled to the front surface of the second body part 112, and the first inlet flow path 813 may be located at a front side of the supply main flow path 812. The first inlet flow path 813 may be formed to protrude from or recessed into the first block 811.

The second inlet flow path 814 may be connected to the supply main flow path 812 at a position spaced apart from the first inlet flow path 813, and may be in contact with the forward flow path 71. In an embodiment, the first block 811 is coupled to the front surface of the second body part 112, and the second inlet flow path 814 may be located at a rear side of the supply main flow path 812, and a plurality of second inlet flow paths 814 may be located to correspond to the forward flow paths 71. A front portion of the second inlet flow path 814 may be in communication with the supply main flow path 812, and a rear portion of the second inlet flow path 814 may be in contact with the forward flow path 71.

A coolant supplied to the first inlet flow path 813 from the front side of the housing 10 may be distributed in the lateral direction along the supply main flow path 812, branched into the plurality of second inlet flow paths 814 located at the rear side of the supply main flow path 812, and then concurrently (e.g., simultaneously) introduced into the plurality of forward flow paths 71. The coolant introduced into the forward flow paths 71 may move rearward along the forward flow paths 71 and exchange heat with the housing 10 and the battery cell assembly 20.

The discharge main flow path 815 may be disposed inside the first block 811 to be spaced apart from the supply main flow path 812. The discharge main flow path 815 may be formed to extend in the lateral direction along the first block 811 at a position spaced apart from the supply main flow path 812 in the lateral direction. The discharge main flow path 815 may be formed to extend along positions corresponding to the plurality of return flow paths 72 and may have a length greater than an interval between the plurality of return flow paths 72.

The first discharge flow path 816 may be connected to the discharge main flow path 815 and may be in contact with the return flow path 72. In an embodiment, the first block 811 is coupled to the front surface of the second body part 112, and the first discharge flow path 816 may be located at a rear side of the discharge main flow path 815, and a plurality of first discharge flow paths 816 may be located to correspond to the return flow paths 72. A front portion of the first discharge flow path 816 may be in communication with the discharge main flow path 815, and a rear portion of the first discharge flow path 816 may be in contact with the return flow path 72.

The second discharge flow path 817 may be connected to the discharge main flow path 815 at a position spaced apart from the first discharge flow path 816 and may be located to be open to the outside of the housing body 11. In an embodiment, the first block 811 is coupled to the front surface of the second body part 112, and the second discharge flow path 817 may be located at a front side of the discharge main flow path 815. The second discharge flow path 817 may be formed to protrude from or recessed into the first block 811.

The coolant may exchange heat with the housing 10 and the battery cell assembly 20 while moving rearward and forward along the forward flow path 71 and the return flow path 72. After undergoing such heat exchange through the forward flow path 71 and the return flow path 72, the coolant may be introduced into the plurality of first discharge flow paths 816 located at a front side of the return flow path 72, and may be distributed in the lateral direction along the discharge main flow path 815. The coolant introduced into the discharge main flow path 815 may be discharged to the front side of the housing 10 through the second discharge flow path 817.

The second cooling manifold 82 may have a shape corresponding to a portion of the second end 116 of the housing 10 and may be coupled to the second end 116. A flow path through which a coolant is supplied from the forward flow path 71 and transferred to the return flow path 72 may be formed in the second cooling manifold 82. The second cooling manifold 82 may return the coolant that has passed through the housing 10 back into the interior of the housing 10.

The second cooling manifold 82 according to an embodiment of the present disclosure may include a second block 821, a transfer main flow path 822, a first branch flow path 823, and a second branch flow path 824.

The second block 821 may have a block shape and may be coupled to the housing body 11. When the forward flow path 71 and the return flow path 72 are formed to pass through the second body part 112 in the front-rear direction, the second block 821 may have a shape of a block corresponding to the rear surface of the second body part 112 and may be coupled to the rear surface of the second body part 112. The rear surface of the second body part 112 may have a certain (e.g., set) thickness in the vertical direction and may have a rectangular shape extending in the lateral direction, and the second block 821 may have the shape of a hexahedral block having a rectangular front surface corresponding to the rear surface.

The transfer main flow path 822 may be formed inside the second block 821. The second block 821 may be formed to extend in the lateral direction, and the transfer main flow path 822 may be formed to extend in the lateral direction along the extension direction of the second block 821. The transfer main flow path 822 may be formed to extend along positions corresponding to the plurality of forward flow paths 71 and the plurality of return flow paths 72 and may have a length greater than an interval between the forward flow paths 71 and the return flow paths 72.

The first branch flow path 823 may be connected to the transfer main flow path 822 and may be in contact with the forward flow path 71. When the second block 821 is coupled to the rear surface of the second body part 112, the first branch flow path 823 may be located at a front side of the transfer main flow path 822, and a plurality of first branch flow paths 823 may be located to correspond to the forward flow paths 71. A front portion of the first branch flow path 823 may be in contact with the forward flow path 71, and a rear portion of the first branch flow path 823 may be in communication with the transfer main flow path 822.

The second branch flow path 824 may be connected to the transfer main flow path 822 at a position spaced apart from the first branch flow path 823, and may be in contact with the return flow path 72. When the second block 821 is coupled to the rear surface of the second body part 112, the second branch flow path 824 may be located at the front side of the transfer main flow path 822, and a plurality of second branch flow paths 824 may be located to correspond to the return flow paths 72. A front portion of the second branch flow path 824 may be in contact with the return flow path 72, and a rear portion of the second branch flow path 824 may be in communication with the transfer main flow path 822.

The coolant that has passed through the plurality of forward flow paths 71 may be introduced into the plurality of first branch flow paths 823, may flow toward the second branch flow paths 824 along the transfer main flow path 822, and may be concurrently (e.g., simultaneously) introduced into the plurality of return flow paths 72 after being branched into the plurality of second branch flow paths 824 located at the front side of the transfer main flow path 822. The coolant introduced into the return flow paths 72 may move toward the front side of the housing 10 along the return flow paths 72 and then may be introduced into the plurality of first discharge flow paths 816 formed on the first cooling manifold 81.

Sizes and numbers of the injection flow paths 50 and the cooling flow paths 70 may be variously adjusted and applied depending on a number and assembly positions of the battery cells 21, a size and required characteristics of the battery module 3, and the like. If the number of injection flow paths 50 and cooling flow paths 70 is large, the connections among the injection flow paths 50 and among the cooling flow paths 70 may become complex. In such a case, by providing the fire-extinguishing manifold 60 and the cooling manifold 80 in a block form as described above, the structures of the injection flow paths 50 and the cooling flow paths 70 may be simplified.

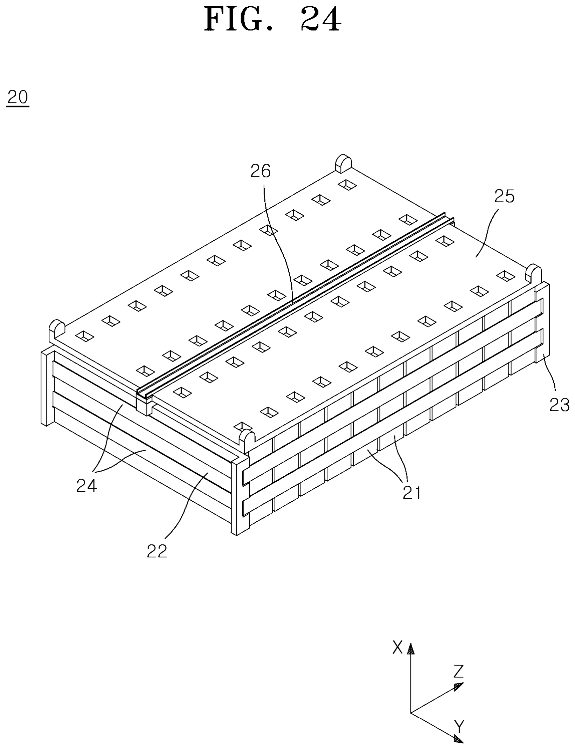

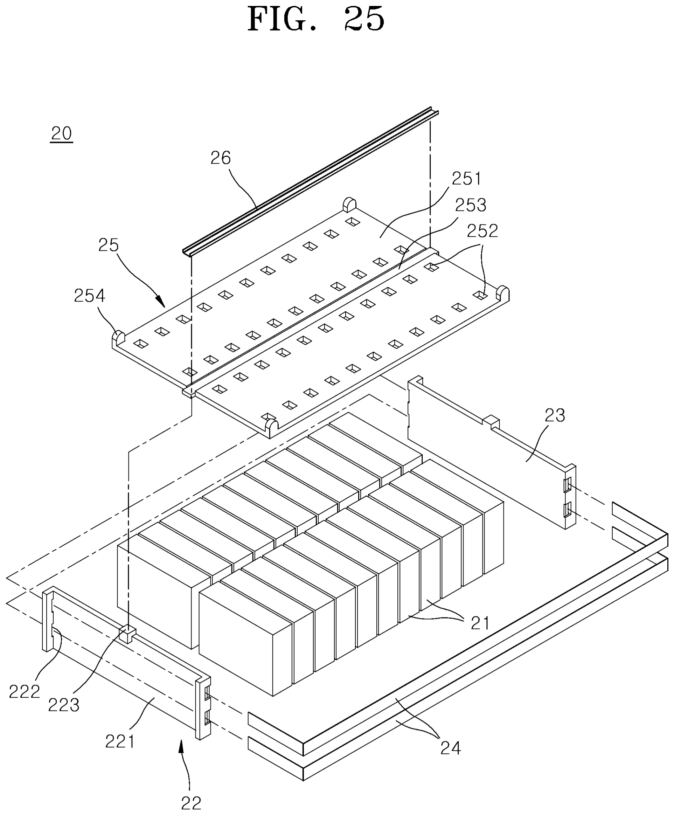

FIG. 24 is a perspective view schematically illustrating the battery cell assembly according to an embodiment of the present disclosure. FIG. 25 is an exploded perspective view of a main portion of FIG. 24.

Referring to FIGS. 24 and 25, the battery cell assembly 20 according to an embodiment of the present disclosure may include the battery cells 21, a first plate 22, a second plate 23, a band 24, a bus bar holder 25, and a support bar 26.

The battery cells 21 may be disposed inside the housing 10 to form the battery module 3. As the plurality of battery cells 21 are connected in series and/or in parallel, a capacity or voltage of the battery module 3 may increase in proportion to the number of battery cells 21. The battery cells 21 may function as unit structures that store and supply power in the battery module 3 and may be lithium-ion secondary batteries, for example.

Although the battery cells 21 are illustrated as prismatic type batteries in the drawings of the present disclosure, the present disclosure is not limited thereto, and the battery cells 21 may be lithium polymer batteries or cylindrical type batteries, for example. A can (not denoted by a reference numeral ) of the battery cell 21 may have any of various shapes, such as a prismatic shape, a cylindrical shape, or a pouch shape, and may be formed of a metal, such as aluminum, an aluminum alloy, or nickel-plated steel, or a laminate film or plastic forming a pouch.

In an embodiment, the first plate 22 and the second plate 23 may each have a panel shape and may be disposed at front and rear sides of the battery cells 21, respectively. The plurality of battery cells 21 may be arranged in the front-rear direction and the lateral direction. The first plate 22 and the second plate 23 may have panel shapes corresponding to the front surfaces of the battery cells 21 located at the foremost position and the rear surfaces of the battery cells 21 located at the rearmost position, respectively.

Right-side portions of the first and second plate 22 and 23 may come into contact with the cell receiving surface 13 of the third body part 113 of the housing 10, and left-side portions of the first and second plate 22 and 23 may come into contact with the cell receiving surface 13 of the fourth body part 114 of the housing 10. A fastening member may be fastened to the third body part 113 of the housing 10 through the right-side portion of the first plate 22 or the second plate 23. A fastening member may be fastened to the fourth body part 114 of the housing 10 through the left-side portion of the first plate 22 or the second plate 23. With such a fastening structure, the first plate 22 and the second plate 23 may be fixed at certain (e.g., set) positions on the housing 10.

The first plate 22 according to an embodiment of the present disclosure may include a panel body 221, slits 222, and a holder assembly part 223.

The panel body 221 may have a shape of a plate corresponding to the front surfaces of the battery cells 21 located at a foremost position. The panel body 221 may have a vertical width corresponding to a vertical width of the battery cell 21. In an embodiment, the battery cells 21 are arranged in two rows in the lateral direction, and the panel body 221 may have a lateral width corresponding to a lateral width of a pair of battery cells 21 on the left and right sides.

The slits 222 may be formed to pass through left-side and right-side portions of the panel body 221, and may each have a slit shape extending in the vertical direction. A plurality of slits 222 may be formed in the left-side portion of the panel body 221 so as to be spaced apart from each other in the vertical direction. A plurality of slits 222 may be formed in the right-side portion of the panel body 221 so as to be spaced apart from each other in the vertical direction.

The band 24 may press (e.g., tightly press) the plurality of battery cells 21 against each other in a transverse direction. In an embodiment, the band 24 may have a flat strip shape. The plurality of battery cells 21 may be arranged in the front-rear direction and the lateral direction, and the band 24 may be disposed to surround a periphery of a battery cell assembly (not designated by a reference numeral) formed by the battery cells 21.

The band 24 may have a closed-loop structure capable of surrounding front-, rear-, left-, and right-side surfaces of the battery cell assembly. The band 24 may have a rigidity sufficient to tightly bind the plurality of battery cells 21 in the transverse direction without allowing the plurality of battery cells 21 to be spaced apart from each other. The band 24 may have elasticity. In an embodiment, the band 24 may include a metallic material capable of providing rigidity, and, in an embodiment, may include an elastic material, such as a rubber material.

The band 24 may extend from a rear side of the panel body 221 to a front side of the panel body 221 through the slit 222 formed in the right-side portion of the panel body 221. The band 24 may extend leftward on the front side of the panel body 221, and may further extend to the rear side of the panel body 221 through the slit 222 formed in the left-side portion of the panel body 221.

The band 24, which extends to the rear side of the panel body 221, may extend rearward on the left side of the plurality of battery cells 21 and may reach the second plate 23. After reaching the second plate 23, the band 24 may pass through the second plate 23 from the left side to the right side, extend forward on the right side of the plurality of battery cells 21, and reach the slit 222 formed in the right-side portion of the first plate 22.

In an embodiment, the band 24 may have a closed-loop structure that continuously extends across the right, front, left, and rear sides of the plurality of battery cells 21. Accordingly, the band 24 may press and bind the plurality of battery cells 21 to each other in the lateral direction and the front-rear direction. At the same time, the band 24 may press the plurality of battery cells 21 arranged in the lateral direction from the front side toward the rear side using the first plate 22. In addition, the band 24 may press the plurality of battery cells 21 arranged in the lateral direction from the rear side toward the front side using the second plate 23.

As described above, by pressing the plurality of battery cells 21 in the front-rear direction and the lateral direction using the band 24, in a state in which the first plate 22 and the second plate 23 are disposed in contact with the front and rear sides of the plurality of battery cells 21, respectively, the battery cells 21, which are subjected to a pressing force in the lateral direction by the band 24, may be prevented or substantially prevented from being twisted or misaligned with each other.

The holder assembly part 223 may be formed at a front side of an upper portion of the panel body 221, the upper portion in contact with the bus bar holder 25. The holder assembly part 223 may have an upper surface with a certain (e.g., set) width. A fastening member may be fastened to the holder assembly part 223 sequentially through the support bar 26 and the bus bar holder 25. With such a fastening structure, the first plate 22 and the second plate 23 may be connected to the support bar 26 and the bus bar holder 25.

The second plate 23 according to an embodiment of the present disclosure may have a same structure as the first plate 22 and may be disposed symmetrically in the front-rear direction. Similar to the first plate 22, the second plate 23 may include the panel body 221, the slit 222, and the holder assembly part 223. Since the second plate 23 may have a structure corresponding to the first plate 22, a further detailed description of the structure of the second plate 23 will be omitted.

The bus bar holder 25 may have a shape of a panel having widths in the lateral direction and the front-rear direction, and may be disposed above the battery cells 21. Bus bars (not shown) configured to electrically connect the plurality of battery cells 21 to each other, and other electrical components for the battery cells 21 may be installed on the bus bar holder 25.

The bus bar holder 25 according to an embodiment of the present disclosure may include a holder panel 251, bus bar assembly holes 252, a bar assembly part 253, and housing assembly parts 254.

The holder panel 251 may have a shape and width corresponding to an upper surface of the battery cell assembly in which the battery cells 21 are arranged in the front-rear direction and the lateral direction, and may be disposed above the battery cells 21. In a state in which the holder panel 251 is seated on the battery cells 21, a lower surface of the holder panel 251 may come into contact with upper surfaces of the battery cells 21.

The bus bar assembly holes 252 may be formed to pass through the holder panel 251 at positions corresponding to the plurality of battery cells 21. A plurality of bus bars respectively connected to the plurality of battery cells 21 may be disposed to vertically pass through the holder panel 251 via the bus bar assembly holes 252.

The bar assembly part 253 may be a device part of the holder panel 251 on which the support bar 26 is seated, and may be formed on an upper surface of the holder panel 251. The bar assembly part 253 may be formed to extend in the front-rear direction at an intermediate portion of the holder panel 251 in the lateral direction. The bar assembly part 253 may be formed to be recessed in a shape corresponding to a lower surface of the support bar 26. The support bar 26 may be stably seated in the bar assembly part 253 having a groove shape.

A front portion of the bar assembly part 253 may protrude forward from the holder panel 251 and may be located to be stacked on an upper side of the holder assembly part 223 of the first plate 22. A rear portion of the bar assembly part 253 may protrude rearward from the holder panel 251 and may be located to be stacked on an upper side of the holder assembly part 223 of the second plate 23.

Right-side and left-side portions of the holder panel 251 may come into contact with the cell receiving surfaces 13 of the third and fourth body parts 113 and 114 of the housing 10, respectively. The housing assembly parts 254 may be formed to protrude upward at the left-side and right-side portions of the holder panel 251, which come into contact with the third and fourth body parts 113 and 114.

A fastening member may be fastened to the third body part 113 through the housing assembly part 254 formed at the right-side portion of the holder panel 251. A fastening member may be fastened to the fourth body part 114 through the housing assembly part 254 formed at the left-side portion of the holder panel 251. With such a fastening structure, the holder panel 251 may be fixed at a certain (e.g., set) position on the housing 10.

In an embodiment, the support bar 26 may have a rod shape extending in the front-rear direction and may be seated on an upper surface of the bus bar holder 25. The support bar 26 may be fitted into the bar assembly part 253 having a groove shape and may be reliably assembled at a certain (e.g., set) position on the bus bar holder 25, and movement thereof in the lateral direction may be stably restricted.

A fastening member may be fastened to the holder assembly part 223 of the first plate 22 sequentially through the support bar 26 and a front portion of the bus bar holder 25. A fastening member may be fastened to the holder assembly part 223 of the second plate 23 sequentially through the support bar 26 and a rear portion of the bus bar holder 25. With such a fastening structure, the bus bar holder 25 may be connected to the first plate 22 and the second plate 23 while being pressed downward toward the plurality of battery cells 21 and supported by the support bar 26.

The plurality of battery cells 21, which are arranged in the lateral direction and the front-rear direction, may be tightly bound while being pressed in the front-rear direction, the lateral direction, and the vertical direction by the first plate 22, the second plate 23, the band 24, the bus bar holder 25, and the support bar 26, which are assembled to and coupled with each other as described above. In this tightly bound state, the plurality of battery cells 21 may form a single battery cell assembly 20, and the battery cell assembly 20 may be easily accommodated in and assembled to the housing 10 in such a form.

According to embodiments of the present disclosure, an energy storage system having a desired capacity can be implemented through a simple structure in which a housing provided in each of a plurality of battery modules is interconnected using a connecting portion. Accordingly, compared to a conventional energy storage system that includes a separate structure corresponding to a rack, a number of components is reduced and assembly man-hours can be decreased.

Further, according to embodiments of the present disclosure, a structure corresponding to a rack is omitted, thereby increasing a degree of freedom in capacity scaling compared to a conventional energy storage system in which a rack having various numbers of layers and columns may be required to be custom-fabricated depending on a required capacity.

Further, according to embodiments of the present disclosure, an injection flow path and a cooling flow path are directly formed in a housing, thereby enabling cooling and fire extinguishing functions to be implemented with a single component corresponding to the housing, compared to a conventional energy storage system requiring additional auxiliary devices to implement the cooling and fire extinguishing functions.

Further, according to embodiments of the present disclosure, housings are arranged in an overlapping manner in longitudinal and transverse directions to form a framework of an energy storage system, thereby reliably preventing or substantially preventing, if a flame or fire occurs inside any one of the housings, the spread of the flame into other housings by the housings and thus further improving fire safety.

However, aspects and effects obtainable through the present disclosure are not limited to the above aspects and effects, and other aspects and technical effects that are not mentioned may be clearly understood by those skilled in the art from the description of the present disclosure.

While the present disclosure has been described with reference to some embodiments shown in the drawings, these embodiments are merely illustrative and it is to be understood that various modifications and equivalent other embodiments can be derived by those skilled in the art on the basis of the embodiments.

## Claims

1. An energy storage system comprising:
a housing;
a battery cell assembly accommodated in the housing and configured to form a battery module together with the housing; and
a connecting portion configured to connect a plurality of housings to each other to form a framework supporting a plurality of battery cell assemblies when a plurality of battery modules are connected.

2. The energy storage system as claimed in claim 1, wherein the housing comprises:
a housing body configured to define an internal space in which the battery cell assembly is configured to be accommodated;
an assembly surface on an outer surface of the housing body, in contact with another housing, and having the connecting portion protruding therefrom or recessed therein; and
a cell receiving surface on an inner surface of the housing body and in contact with the battery cell assembly;
and, optionally,
wherein the housing body comprises:
a first body part;
a second body part located apart from the first body part in a first direction; and
a third body part and a fourth body part located apart from each other in a second direction perpendicular to the first direction and configured to define the internal space in which the battery cell assembly is configured to be accommodated together with the first and second body parts, and
the energy storage system further comprises:
an injection flow path in the first body part and configured to define a flow path through which a fluid is injectable into the housing; and
a cooling flow path in at least one of the second body part, the third body part, and the fourth body part, and configured to define a flow path through which a fluid is flowable.

3. The energy storage system as claimed in any preceding claim, wherein the connecting portion comprises a first connecting portion comprising a structure configured to connect the housings to each other in a first direction.

4. The energy storage system as claimed in claim 3, wherein the first connecting portion comprises:
a male assembly part on the housing and protruding from a first surface facing the first direction; and
a female assembly part on the housing at a second surface facing a side opposite to the first surface, and having a shape into which the male assembly part is insertable;
and, optionally,
wherein the male assembly part comprises:
a first protrusion protruding from the first surface in the first direction; and
a second protrusion at an end of the first protrusion and having a width greater than a width of the first protrusion, and
the female assembly part has a shape corresponding to the male assembly part and the male assembly part is configured to be fitted into the female assembly part.

5. The energy storage system as claimed in claim 3, wherein the first connecting portion comprises:
an intermediate connecting part configured to connect the housings to each other at an intermediate portion of each of contact surfaces of the housings; and
an end connecting part configured to connect the housings to each other at an edge portion of each of the contact surfaces of the housings.

6. The energy storage system as claimed in any of claims 3 to 5, wherein the connecting portion further comprises a second connecting portion having a structure configured to connect the housings to each other in a second direction perpendicular to the first direction.

7. The energy storage system as claimed in claim 6, wherein the second connecting portion comprises:
a first groove on the housing and recessed in a third surface facing the second direction;
a second groove on the housing at a fourth surface facing a side opposite to the third surface; and
a wedge configured to be inserted in an insertion space, which is defined between the housings by the first groove and the second groove facing each other;
and, optionally, wherein the first groove comprises:
a first step groove on the third surface and facing the second groove; and
a second step groove configured as a continuation of an end of the first step groove and having a width greater than a width of the first step groove, wherein the second groove has a shape symmetrical to the first groove, and
the wedge has a shape corresponding to the insertion space and is configured to be inserted in the insertion space.

8. The energy storage system as claimed in any preceding claim, further comprising a reinforcing member extending in a first direction and coupled to a housing assembly formed by interconnecting the plurality of housings.

9. The energy storage system as claimed in claim 8, wherein the connecting portion comprises:
a first groove on the housing in a second direction perpendicular to the first direction; and
a second groove on the housing at a side opposite to the first groove, and
the reinforcing member comprises:
a support extending in the first direction and configured to come in contact with the plurality of housings in the second direction; and
a plurality of coupling protrusions on the support at intervals in the first direction, and configured to be fitted into a plurality of first grooves or second grooves in the housings, each different from the others;
and, optionally,
wherein the reinforcing member comprises:
a first reinforcing member that comes into contact with the housing assembly in the second direction and is coupled to the plurality of first grooves; and
a second reinforcing member that comes into contact with the housing assembly at a side opposite to the first reinforcing member and is coupled to the plurality of second grooves.

10. The energy storage system as claimed in any preceding claim, further comprising an injection flow path in the housing and configured to define a flow path through which a fluid is injectable into the housing.

11. The energy storage system as claimed in claim 10, wherein the housing comprises:
a housing body configured to form an internal space in which the battery cell assembly is configured to be accommodated; and
a cell receiving surface on an inner surface of the housing body and facing the internal space, and
the injection flow path comprises:
a transfer flow path in the housing body and configured to form a flow path through which the fluid is transferable; and
an open flow path extending from the transfer flow path to the cell receiving surface and to be open toward the internal space;
and, optionally,
(A) wherein the injection flow path further comprises a plug coupled to close the open flow path and configured to open the open flow path by melting at a certain temperature or higher;
or
(B) further comprising a fire-extinguishing manifold coupled to the housing and configured to supply the fluid to the injection flow path,
wherein the fire-extinguishing manifold comprises:
a manifold body coupled to the housing body;
a main flow path inside the manifold body;
an inlet flow path connected to the main flow path and located to be open to an outside of the housing body; and
a transfer flow path that is connected to the main flow path at a position spaced apart from the inlet flow path and comes into contact with the injection flow path.

12. The energy storage system as claimed in claim 1, further comprising a cooling flow path in the housing and configured to define a flow path through which a fluid is flowable.

13. The energy storage system as claimed in claim 12, further comprising a cooling manifold coupled to the housing, and configured to supply the fluid to the cooling flow path and discharge the fluid having passed through the cooling flow path.

14. The energy storage system as claimed in claim 13, wherein the cooling flow path comprises:
a forward flow path configured to define a flow path through which the fluid is flowable from a first end of the housing toward a second end of the housing; and
a return flow path located apart from the forward flow path and configured to define a flow path through which the fluid having passed through the forward flow path is flowable toward the first end, and
the cooling manifold comprises:
a first cooling manifold coupled to the first end, and configured to supply the fluid to the forward flow path and discharge the fluid having passed through the return flow path; and
a second cooling manifold coupled to the second end and configured to transfer the fluid having passed through the forward flow path to the return flow path.
